# EUROPÄISCHE PATENTSCHRIFT

(11) **EP 3 622 850 B1**
(45) Veröffentlichungstag und Bekanntmachung des Hinweises auf die Patenterteilung: **30.12.2020**
(21) Anmeldenummer: 19183590.9
(22) Anmeldetag: 01.07.2019
(51) Int. Cl.: A45F 3/04, A45F 3/08, B25F 5/02, H01M 2/10

(54) **RÜCKENTRAGVORRICHTUNG, INSBESONDERE FÜR EINEN AKKUPACK**
BACK-HELD CARRYING DEVICE, IN PARTICULAR FOR A BATTERY PACK
DISPOSITIF DE PORTAGE DERRIÈRE, EN PARTICULIER POUR UN BLOC D'ACCUMULATEUR

(30) Priorität: 17.09.2018 EP 18194891
(43) Veröffentlichungstag der Anmeldung: 18.03.2020
(73) Patentinhaber: Andreas Stihl AG & Co. KG, 71336 Waiblingen (DE)
(72) Erfinder: NORDMANN, Alexander, 70437 Stuttgart (DE); HERRMANN, Markus, 70736 Fellbach (DE); WAGNER, Daniel, 73650 Winterbach (DE); ZELLER, Markus, 73527 Schwäbisch-Gmünd/Herlikhofen (DE); KOLB, Joachim, 71638 Ludwigsburg (DE); PFEIFER, Markus, 71364 Winnenden (DE)
(74) Vertreter: Patentanwälte Ruff, Wilhelm, Beier, Dauster & Partner mbB

(56) Entgegenhaltungen:
- EP-A1- 0 887 005
- EP-A2- 3 106 565
- WO-A1-2009/157881
- WO-A1-2018/007111
- US-A- 5 732 867
- US-A- 5 954 250

## Beschreibung

Die Erfindung bezieht sich auf eine Rückentragvorrichtung, die eine Tragbasis, eine Traggurteinheit für die Tragbasis und eine Haltevorrichtung zum lösbaren Halten des Akkupacks in einer Traglage an der Tragbasis umfasst, wobei die Haltevorrichtung eine Andockeinrichtung an der Tragbasis zum schwenkbeweglichen Andocken des Akkupacks in einer Andocklage und eine Festhalteeinrichtung an der Tragbasis zum Festhalten des Akkupacks in der gegenüber der Andocklage zur Tragbasis hin eingeschwenkten Traglage umfasst, und auf ein Geräteset mit einer solchen Rückentragvorrichtung.

Die Tragbasis dient dazu, einen zu tragenden Gegenstand aufzunehmen, z.B. durch Befestigen des Gegenstands an der Tragbasis oder dadurch, dass der Gegenstand in einen Aufnahmeraum der Tragbasis eingebracht wird. Die Traggurteinheit dient dazu, dass ein Benutzer die Tragbasis mit dem an oder in ihr befindlichen Gegenstand auf dem Rücken tragen kann.

Die Rückentragvorrichtung kann insbesondere zum Tragen eines Akkupacks, insbesondere eines rückentragbaren Akkupacks zur elektrischen Energieversorgung handgeführter Elektrogeräte, insbesondere elektrisch angetriebener Garten- und/oder Forstbearbeitungsgeräte, ausgelegt sein. Unter handgeführten Elektrogeräten sind vorliegend vor allem Elektrogeräte zu verstehen, die handgetragen oder bodengeführt sind, insbesondere solche, die der Garten- und/oder Forstbearbeitung dienen, wie Motorsägen, Heckenscheren, Laubblasgeräte, Kehrgeräte, Rasenmäher und Vertikutierer, um nur stellvertretend einige Anwendungsbeispiele zu nennen. Der Akkupack ist dafür ausgelegt, mittels des Rückentragsystems vom Benutzer auf dem Rücken getragen zu werden und sorgt für die elektrische Energie, die das Elektrogerät im Gebrauch benötigt, wozu er geeignete Akkuzellen besitzt, worunter vorliegend beliebige herkömmliche Akkumulator- bzw. Batteriezellen zu verstehen sind. Typischerweise sind die Akkuzellen unter Bildung eines Akkuzellenblocks angeordnet.

In der Anwendung zum Tragen eines Akkupacks weist die Rückentragvorrichtung eine Haltevorrichtung zum lösbaren Halten des Akkupacks in einer Traglage an der Tragbasis auf. Für die Haltevorrichtung sind verschiedene Befestigungs- bzw. Haltemechanismen bekannt. Bei einem dieser bekannten Typen wird der Akkupack in einer translatorischen Annäherungsbewegung an die Tragbasis, die z.B. von einer plattenartigen Tragstruktur gebildet sein kann, angelegt und dann in einer zur Annäherungsbewegung senkrechten Verschiebebewegung, z.B. von oben nach unten, in die Traglage verbracht, siehe hierzu beispielsweise die Offenlegungsschriften US 2016/0345714 A1 und WO 2018/007111 A1 sowie die Gebrauchsmusterschriften DE 20 2012 013 284 U1 und DE 20 2013 011 447 U1. Dabei wird vorliegend, soweit nichts anderes gesagt, bezüglich der Lageorientierung auf die Orientierung der Rückentragvorrichtung, wenn sie sich auf dem Rücken eines Benutzers befindet, bzw. die Orientierung des Akkupacks in seiner Traglage bei auf dem Rücken eines Benutzers befindlicher Rückentragvorrichtung Bezug genommen. Bei dem vorliegend betrachteten, alternativen Typ weist die Haltevorrichtung eine Andockeinrichtung an der Tragbasis zum schwenkbeweglichen Andocken des Akkupacks in einer Andocklage und eine Festhalteeinrichtung an der Tragbasis zum Festhalten des Akkupacks in der gegenüber der Andocklage zur Tragbasis hin eingeschwenkten Traglage auf.

Die Offenlegungsschrift EP 2 819 207 A1 offenbart eine derartige Haltevorrichtung gemäß dem Oberbegriff des Anspruchs 1, wobei dort die Andockeinrichtung von einer oberseitigen Randkante der Tragbasis gebildet ist, die von einer hakenförmigen Ausbildung eines oberseitigen Randes des Akkupacks derart übergriffen werden kann, dass eine gewissen Schwenkbeweglichkeit des Akkupacks gegenüber der Tragbasis mit der oberen Randkante der Tragbasis als Schwenkachse erhalten bleibt. Als Festhalteeinrichtung fungieren an der Tragbasis zwei in deren unterem Bereich seitlich angeordnete Rastvorsprünge, die mit korrespondierenden Gegenrastvorsprüngen im unteren Seitenbereich des Akkupacks unter Bildung einer ausrastbaren Schnappverbindung zusammenwirken, wobei ein Griff bei diesem Akkupack an dessen Unterseite angeordnet ist, d.h. an dessen in Traglage auf dem Rücken eines Benutzers unterer Seite.

Meist umfasst die Traggurteinheit der Rückentragvorrichtung eine Schultergurteinheit als Traghilfe für den Benutzer. Für entsprechende Anwendungen ist es zudem günstig, wenn die Traggurteinheit eine Beckengurteinheit aufweist. In einer typischen Rückentragvorrichtung dieser Art weist die Traggurteinheit zusätzlich eine Gelenkeinheit auf, welche die Beckengurteinheit gelenkig mit der Tragbasis verbindet. In der bereits erwähnten Gebrauchsmusterschrift DE 20 2013 011 447 U1 besteht die Gelenkeinheit aus einem Gelenk, über das ein Querträger um eine zu einer Ebene der plattenförmigen Tragbasis senkrechte, im Wesentlichen horizontale Schwenkachse schwenkbeweglich an die Tragbasis angekoppelt ist, wobei der Querträger als Befestigung für einen Beckengurt dient. Bei einer in der Offenlegungsschrift DE 10 2015 002 724 A1 offenbarten Rückentragvorrichtung besteht die Gelenkeinheit aus einem vorzugsweise durch ein Gewebe-/Filmscharnier gebildeten Gelenk, mit dem die Beckengurteinheit um eine zu einer Ebene der plattenförmigen Tragbasis parallele, im Wesentlichen horizontale Schwenkachse schwenkbeweglich mit der Tragbasis verbunden ist. Dies soll das Einklappen der Beckengurteinheit beim Abstellen der Rückentragvorrichtung ermöglichen und auf diese Weise eine Behinderung des aufrechten Abstellens der Rückentragvorrichtung durch die Beckengurteinheit vermeiden.

Weiter sind Rückentragvorrichtungen der eingangs genannten Art bekannt, bei denen die Traggurteinheit mindestens eine lösbar mit der Tragbasis verbindbare Schultergurteinheit aufweist, die zwecks Höhenverschiebbarkeit der Tragbasis verstellt werden kann. Herkömmlich wird dies meist dadurch realisiert, dass für einen jeweiligen Schultergurt der Schultergurteinheit ein Gurtriemen verwendet wird, der in seiner Länge verstellt werden kann.

Der Erfindung liegt als technisches Problem die Bereitstellung einer Rückentragvorrichtung der eingangs genannten Art, die gegenüber den oben erwähnten Rücktragvorrichtungen des Standes der Technik verbessert ist, insbesondere hinsichtlich der Art der Befestigung eines Akkupacks an der Tragbasis, und eines mit einer solchen Rückentragvorrichtung ausgerüsteten Gerätesets zugrunde.

Die Erfindung löst dieses Problem durch die Bereitstellung einer Rückentragvorrichtung mit den Merkmalen des Anspruchs 1 und eines Gerätesets mit den Merkmalen des Anspruchs 14. Vorteilhafte Weiterbildungen der Erfindung sind in den Unteransprüchen angegeben, deren Wortlaut hiermit durch Verweis zum Bestandteil der Beschreibung gemacht wird.

Erfindungsgemäß ist die Rückentragvorrichtung dafür eingerichtet, dass ein Benutzer mit ihr einen Akkupack zur elektrischen Energieversorgung handgeführter Elektrogeräte auf dem Rücken tragen kann, wobei es sich insbesondere um elektrische angetriebene Garten- und/oder Forstbearbeitungsgeräte handeln kann. Dazu beinhaltet die Rückentragvorrichtung eine Tragbasis, eine Traggurteinheit für die Tragbasis und eine Haltevorrichtung zum lösbaren Halten des Akkupacks in einer Traglage an der Tragbasis, wobei die Haltevorrichtung eine Andockeinrichtung an der Tragbasis zum schwenkbeweglichen Andocken des Akkupacks in einer Andocklage und eine Festhalteeinrichtung an der Tragbasis zum Festhalten des Akkupacks in der gegenüber der Andocklage zur Tragbasis hin eingeschwenkten Traglage umfasst. Charakteristischerweise ist die Andockeinrichtung an einem unteren Bereich der Tragbasis angeordnet.

Aufgrund dieser Merkmale der Rückentragvorrichtung lässt sich der Akkupack in sehr vorteilhafter Weise an die Rückentragvorrichtung ankoppeln. Dazu wird er unter Verwendung der Andockeinrichtung an den unteren Bereich der Tragbasis angedockt und kann dann zur Tragbasis hin zwecks Erreichen der Traglage eingeschwenkt werden. Wenn der Akkupack an seiner Oberseite mit einem Griff versehen ist, kann er am Griff gehalten werden, während er an den unteren Bereich der Tragbasis angedockt und dann zur Tragbasis hin in die Traglage eingeschwenkt wird.

Die Handhabung des Akkupacks beim Anbringen und Abnehmen an bzw. von der Rückentragvorrichtung kann auf diese Weise auf den oberen Bereich des Akkupacks und der Rückentragvorrichtung beschränkt werden, der Benutzer braucht nicht zwingend Handhabungsmaßnahmen am unteren Bereich des Akkupacks und der Rückentragvorrichtung vornehmen. Dies erleichtert dem Benutzer in der Regel die Handhabung, wenn er den Akkupack an der auf dem Boden oder einer Abstellfläche abgestellten Rückentragvorrichtung anbringen will. Zudem bleibt für ihn diejenige Seite der Tragbasis, an welcher der Akkupack anzubringen ist, nach dem Andocken des Akkupacks noch gut sichtbar, was ihm das Einschwenken in die Traglage erleichtern kann. Das Andocken des Akkupacks am unteren Bereich der Tragbasis ist auch aus Stabilitätsgründen von Vorteil, indem das mit dem Andocken des Akkupacks einhergehende Kippmoment für die Rückentragvorrichtung gering gehalten werden kann, insbesondere deutlich geringer als im Fall eines Andockens des Akkupacks an einem mittleren oder gar oberen Bereich der Tragbasis.

Gemäß einem Aspekt der Erfindung weist die Festhalteeinrichtung einen an der Tragbasis zwischen einer Freigabestellung und einer Festhaltestellung verschieblich angeordneten Festhalteschieber mit einem Festhaltehaken auf, der zum festhaltenden Hintergreifen eines korrespondierenden Festhaltegegenelements des Akkupacks in der Traglage ausgelegt ist. Dies stellt eine konstruktiv einfache und funktionell vorteilhafte Realisierung der Festhalteeinrichtung dar. Bei nicht angedocktem Akkupack befindet sich der Festhalteschieber in der Festhaltestellung, wobei er eine Anlaufschräge aufweist, die dafür ausgelegt ist, durch Zusammenwirken mit dem Festhaltegegenelement des Akkupacks den Festhalteschieber beim Einschwenken des an die Tragbasis angedockten Akkupacks in Richtung Traglage selbsttätig in Richtung Freigabestellung zu verschieben. Mit dieser Maßnahme lässt sich der Festhalteschieber automatisch durch das Einschwenken des Akkupacks in dessen Traglage aus der Festhaltestellung herausbewegen, ohne dass er dazu vom Benutzer separat betätigt werden muss. Der Festhalteschieber kann in diesem Fall bevorzugt durch ein entsprechendes elastisches Vorspannelement in Richtung Festhaltestellung vorgespannt sein. Der Festhalteschieber wird dann beim Einschwenken des Akkupacks in seine Traglage gegen die Wirkung des Vorspannelements in die Freigabestellung verschoben, und sobald der Akkupack seine Traglage erreicht hat, kann das Vorspannelement den Festhalteschieber selbsttätig in seine Festhaltestellung zurückbringen. Gemäß einem alternativen Aspekt der Erfindung weist die Festhalteeinrichtung einen an der Tragbasis zwischen einer Freigabestellung und einer Festhaltestellung schwenkbeweglich angeordneten Festhaltehebel mit einem Festhaltebügel auf, der zum festhaltenden Hintergreifen eines korrespondierenden Festhaltegegenelements des Akkupacks in der Traglage ausgelegt ist. Auch dies stellt eine konstruktiv einfache, handhabungstechnisch günstige und funktionell zuverlässige Realisierung der Festhalteeinrichtung dar.

In einer Weiterbildung der Erfindung stellt die Andockeinrichtung eine zu einer Unterseite der Tragbasis im Wesentlichen parallele Schwenkachse für die Schwenkbewegung des Akkupacks in die Traglage bereit. Dies trägt weitergehend zur Optimierung der Handhabung des Akkupacks beim Montieren an und Demontieren von der Rückentragvorrichtung bei.

In einer Weiterbildung der Erfindung weist der Festhaltebügel eine bogenförmig mit nicht-konstantem Abstand von einer Schwenkachse des Festhaltehebels verlaufende Anlauffläche auf, gegen die das Festhaltegegenelement mit einem Abstand von der Schwenkachse anlegbar ist, der mit zunehmendem Verschwenken des Festhaltehebels in Richtung Festhaltestellung abnimmt. Dies erleichtert ein sicheres Einschwenken des Akkupacks in seine Traglage an der Tragbasis. Insbesondere ermöglicht diese spezielle Kinematik des Festhaltehebels einen optimalen Kraftverlauf der auf den Akkupack ausgeübten Einschwenkkraft bzw. Festhaltekraft. Die Anlauffläche erstreckt sich vorzugsweise mindestens in einem eintrittsseitigen Bereich mit dem abnehmenden Abstand von der Schwenkachse, in entsprechenden Ausführungsformen auf ihrer gesamten Länge bis zu ihrem mit der Festhaltestellung des Festhaltehebels korrespondierenden Endpunkt oder alternativ nur bis zu einem vom Endpunkt beabstandeten Punkt, ab dem ihr Abstand von der Schwenkachse bis zum Erreichen des Endpunkts oder jedenfalls auf einem Teil dieser Restlänge der Anlauffläche nicht mehr abnimmt.

In einer Weiterbildung der Erfindung weist der Festhaltebügel eine bogenförmig mit nicht-konstantem Abstand von einer Schwenkachse des Festhaltehebels verlaufende Anlauffläche auf, gegen die das Festhaltegegenelement mit einem Abstand von der Schwenkachse anlegbar ist, wobei sich die Anlauffläche von einem Anfangspunkt bis zu einem der Festhaltestellung des Festhaltehebels entsprechenden Endpunkt erstreckt und ein Abstand eines Anlaufkontaktpunktes der Anlauffläche mit dem Festhaltegegenelement mit zunehmendem Verschwenken des Festhaltehebels in Richtung Festhaltestellung vom Anfangspunkt bis zum Erreichen eines Wendepunktes der Anlauffläche abnimmt und die Anlauffläche am Wendepunkt zur Bereitstellung einer Umkehr eines vom Festhaltegegenelement auf den Festhaltehebel ausübbaren Drehmoments von einem in Richtung Freigabestellung wirkenden Drehmoment in ein in Richtung Festhaltestellung wirkendes Drehmoment eingerichtet ist. Diese spezielle Kinematik des Festhaltehebels ermöglicht einen optimalen Kraftverlauf der auf den Akkupack ausgeübten Einschwenkkraft bzw. Festhaltekraft, und durch die spezielle Drehmomentumkehr auf den Festhaltehebel am Wendepunkt kann dafür gesorgt werden, dass der Festhaltehebel bei Einwirkung einer in Richtung Andocklage weisenden Kraft auf den Akkupack ein Drehmoment in Richtung seiner Festhaltestellung erfährt, wenn er sich direkt am Wendepunkt auf dessen dem Endpunkt der Anlauffläche zugewandten Seite befindet. Letzteres hat zur Folge, dass eine solche Krafteinwirkung auf den Akkupack nicht zu einem weiteren Ausschwenken des Akkupacks führt, sondern der Festhaltehebel den Akkupack in derjenigen Position festhält, die der Lage des Festhaltegegenelements am Wendepunkt der Anlauffläche entspricht.

In einer Weiterbildung der Erfindung weist der Festhaltehebel eine Auswerferkontur auf, die dafür eingerichtet ist, beim Verschwenken des Festhaltehebels in Richtung Freigabestellung eine in Richtung Andocklage wirkende Auswerferkraft auf den Akkupack auszuüben. Diese Maßnahme hat den Vorteil, dass durch das Verschwenken des Festhaltehebels in Richtung Freigabestellung das Ausschwenken des Akkupacks aus seiner Traglage in seine Andocklage unterstützt werden kann, d.h. es wird auf diese Weise eine Ausschwenkhilfe für das Herausschwenken des Akkupacks von seiner Traglage in seine Andocklage bereitgestellt.

In einer Ausgestaltung der Erfindung weist die Auswerferkontur eine auf eine Gegenanlagefläche des Akkupacks wirkende Auswurfdruckfläche auf einer der Anlauffläche abgewandten Seite des Festhaltebügels und/oder eine auf das Festhaltegegenelement des Akkupacks wirkende Auswurfdruckfläche auf einer der Anlauffläche zugewandten Seite eines Auswerfernockens des Festhaltehebels auf. Beide Maßnahmen stellen je für sich oder in Kombination vorteilhafte Realisierungen für die Bereitstellung der Auswerferkraft auf den Akkupack durch den Festhaltehebel dar. Bei der kombinierten Realisierung können sich die beiden Auswurfdruckflächen je nach Systemauslegung so ergänzen, dass sie in unterschiedlichen Schwenkbereichen des Festhaltehebels wirksam sind oder zumindest in einem Teilbereich der gesamten Schwenkbewegung des Festhaltehebels gleichzeitig wirksam sind.

In einer Weiterbildung der Erfindung weist der Festhalteschieber oder der Festhaltehebel ein nutzerbetätigtes Bedienelement auf, das sich an einer von einer Akkupack-Ankoppelseite der Tragbasis abgewandten Seite der Tragbasis befindet. Dies erleichtert die Handhabung für den Benutzer beim Verbringen des Akkupacks von seiner Andocklage in seine Traglage. Der Benutzer kann dazu den Festhalteschieber bzw. Festhaltehebel von derjenigen Seite der Tragbasis aus bedienen, die der Seite der Tragbasis zum Ankoppeln des Akkupacks abgewandt ist. Diese Bedienbetätigung wird daher durch den angedockten Akkupack nicht behindert.

In einer Weiterbildung der Erfindung weist die Haltevorrichtung eine Abstützfederanordnung auf, die eine elastische Abstützung mit einer in Ausschwenkrichtung wirkenden Federkraft für den Akkupack in Traglage bereitstellt. Dies trägt zu einem sicheren, spielfreien Halten des Ackupacks in seiner Traglage an der Tragbasis bei. Da die Federkraft der Abstützfederanordnung in Ausschwenkrichtung von der Tragbasis weg auf den Akkupack wirkt, kann die Abstützfederanordnung ein unerwünschtes stoßartiges Anschlagen des Akkupacks gegen starre Teile der Tragbasis verhindern. Zweckmäßigerweise dient eine Ausschwenksperre dazu, ein Ausschwenken des Akkupacks aufgrund der Federkraft der Abstützfederanordnung zu blockieren. Diese Ausschwenksperre kann gelöst werden, wenn der Benutzer den Akkupack von der Tragbasis abnehmen und ihn hierzu zunächst von seiner Traglage in seine Andocklage ausschwenken will. Vorzugsweise fungiert der Festhalteschieber bzw. der Festhaltehebel als derartige Ausschwenksperre, alternativ kann eine separate Ausschwenksperre vorgesehen sein.

In einer Weiterbildung der Erfindung umfasst die Rückentragvorrichtung eine Tragbasis und eine Traggurteinheit für die Tragbasis, wobei die Traggurteinheit eine Schultergurteinheit, eine Beckengurteinheit und eine Gelenkeinheit aufweist, welche die Beckengurteinheit gelenkig mit der Tragbasis verbindet. Die Gelenkeinheit beinhaltet ein Doppelgelenk, durch das die Beckengurteinheit um zwei Schwenkachsen schwenkbeweglich mit der Tragbasis verbunden ist, wobei die eine der beiden Schwenkachsen im Wesentlichen parallel zu einer Plattenebene der Tragbasis und die andere Schwenkachse im Wesentlichen senkrecht zu der Plattenebene der Tragbasis verläuft.

Dies stellt eine sehr vorteilhafte Realisierung für eine um zwei Achsen schwenkbewegliche Anlenkung der Beckengurteinheit an die Tragbasis dar, ohne dass hierfür zwei einzelne Gelenkeinheiten benötigt werden und ohne dass sich zwei derartige Gelenke gegenseitig störend beeinflussen können. Durch dieses Doppelgelenk kann die Beckengurteinheit sowohl um die zur Tragbasis-Plattenebene im Wesentlichen parallele Schwenkachse als auch um die zur Tragbasis-Plattenebene im Wesentlichen senkrechte Schwenkachse in einem jeweils gewünschten Maß gegenüber der Tragbasis verschwenkt werden. Beide Schwenkbeweglichkeiten sind zur Bereitstellung entsprechender Ausweichbewegungen der Beckengurteinheit relativ zur Tragbasis von Vorteil.

In einer Ausgestaltung der Erfindung ist die Gelenkeinheit und damit auch das Doppelgelenk durch ein eigenständiges Bauteil gebildet, das einerseits an der Beckengurteinheit und andererseits an der Tragbasis befestigt ist. Eine solche Gelenkeinheit lässt sich mit hoher Belastbarkeit und Lebensdauer fertigen und schränkt die Materialwahl für die Beckengurteinheit und die Tragbasis nicht ein.

In einer Ausgestaltung der Erfindung verläuft die eine Schwenkachse im Wesentlichen zwischen und parallel zu zwei einander zugewandten Seitenkanten der Beckengurteinheit einerseits und der Tragbasis andererseits, und die andere Schwenkachse verläuft gegenüber dieser Schwenkachse in von der Beckengurteinheit abgewandter Richtung versetzt. Dies ergibt eine vorteilhafte Kinematik für die Schwenkbeweglichkeit der Beckengurteinheit relativ zur Tragbasis.

In einer Weiterbildung der Erfindung umfasst die Rückentragvorrichtung eine Tragbasis und eine Traggurteinheit für die Tragbasis, wobei die Traggurteinheit mindestens eine Schultergurteinheit aufweist, die lösbar mit der Tragbasis verbindbar ist. Charakteristischerweise umfasst die Schultergurteinheit bei dieser Weiterbildung mindestens einen biegesteifen Gurthalter, der mittels eines Rastmechanismus in mehreren unterschiedlichen Höhen lösbar verrastend an der Tragbasis anbringbar ist, und mindestens einen mit diesem verbundenen flexiblen Gurtriemen. Die biegesteife Ausführung des Gurthalters ermöglicht eine sehr lagestabile Anbindung der Schultergurteinheit an die Tragbasis. Die Möglichkeit, den Gurthalter in mehreren unterschiedlichen Höhen lösbar verrastend an der Tragbasis anbringen zu können, stellt eine vorteilhafte Höheneinstellbarkeit für die Schultergurteinheit zur Verfügung. Die im Gegensatz zum Gurthalter flexible, nicht biegesteife Ausführung des Gurtriemens ermöglicht in üblicher Weise eine bequemes Tragen der Rückentragvorrichtung durch den Benutzer.

In einer Ausgestaltung der Erfindung stellt der Rastmechanismus mehrere Rastungen für den mindestens einen Gurthalter in den unterschiedlichen Höhen an der Tragbasis bereit, wobei die jeweilige Rastung eine Rastfreigabeposition und eine gegenüber der Rastfreigabeposition nach oben versetzte Rasthalteposition beinhaltet, zwischen denen der Gurthalter an der Tragbasis höhenverschiebbar ist. In der Rastfreigabeposition kann der Gurthalter in der gewünschten Höhe an die Tragbasis angesetzt bzw. von dieser abgenommen werden. In der Rasthalteposition ist der Gurthalter verrastend mit der Tragbasis verbunden, so dass er sich nicht von der Tragbasis lösen kann. Zum Lösen des Gurthalters von der Tragbasis ist der Gurthalter nach unten in die Rastfreigabeposition zu verschieben. Die nach oben versetzte Anordnung der Rasthalteposition gegenüber der Rastfreigabeposition hat den Vorteil, dass eine an der Tragbasis nach unten wirkende Gewichtskraft nicht dazu führen kann, dass sich der Gurthalter unbeabsichtigt in die Rastfreigabeposition verschiebt. Vielmehr wirkt diese Gewichtskraft der Tragbasis in Richtung eines sicheren Verbleibs des Gurthalters in der Rasthalteposition.

In einer Ausgestaltung der Erfindung weist der Rastmechanismus eine entriegelbare Rastverriegelung auf, die den Gurthalter in der jeweiligen Rasthalteposition verriegelt hält. Erst nach Entriegeln dieser Verriegelung durch den Benutzer kann der Gurthalter an der Tragbasis nach unten in die Rastfreigabeposition verschoben und dann von der Tragbasis abgenommen bzw. in einer anderen Höhe an dieser wieder angebracht werden. Dies stellt eine zusätzliche Sicherung für die höheneinstellbare Halterung des Gurthalters an der Tragbasis dar.

In einem weiteren Aspekt stellt die Erfindung ein Geräteset zur Verfügung, das eine erfindungsgemäße Rückentragvorrichtung und einen an dieser befestigbaren, rückentragbaren Akkupack zur elektrischen Energieversorgung handgeführter Elektrogeräte umfasst, insbesondere elektrisch angetriebener Garten- und/oder Forstbearbeitungsgeräte. Der Akkupack kann insbesondere ein solcher sein, wie er in der europäischen Patentanmeldung der Anmelderin mit Anmeldenummer 18194901.7 oder EP-A1-3624212 offenbart ist, deren Inhalt hiermit durch Verweis in vollem Umfang zum Bestandteil der Offenbarung der vorliegenden Anmeldung gemacht wird.

In einer Ausgestaltung der Erfindung umfasst das Geräteset zusätzlich ein von dem Akkupack mit elektrischer Energie versorgbares, handgeführtes Elektrogerät.

Vorteilhafte Ausführungsformen der Erfindung sind in den Zeichnungen dargestellt. Diese und weitere vorteilhafte Ausführungsformen der Erfindung werden nachfolgend detaillierter angegeben und beschrieben. Hierbei zeigen:
Fig. 1 eine perspektivische Frontansicht einer Rückentragvorrichtung,
Fig. 2 eine perspektivische Rückansicht der Rückentragvorrichtung,
Fig. 3 eine Detailansicht eines Bereichs III in Fig. 2,
Fig. 4 eine Längsschnittansicht einer Rückentragvorrichtung mit Festhaltehebel und eines in Andocklage angekoppelten Akkupacks,
Fig. 5 eine Detailansicht eines oberen Teils von Fig. 4,
Fig. 6 die Ansicht von Fig. 4 mit dem Akkupack in Traglage,
Fig. 7 die Ansicht von Fig. 5 mit dem Akkupack in Traglage,
Fig. 8 eine perspektivische Ausschnittansicht eines Verbindungsbereichs einer Beckengurteinheit und einer Schultergurteinheit einer Rückentragvorrichtung,
Fig. 9 eine Ansicht entsprechend Fig. 1 mit einem weggelassenen Gurtriemen,
Fig. 10 eine Ansicht entsprechend Fig. 9 mit weggelassenen Gurtriemen und teilweise weggelassener Beckengurteinheit,
Fig. 11 die Rückansicht der Rückentragvorrichtung von Fig. 10,
Fig. 12 eine Ansicht entsprechend Fig. 5 für eine Rückentragvorrichtung mit Festhalteschieber,
Fig. 13 eine perspektivische Rückansicht eines den Festhalteschieber umfassenden Bereichs der Rückentragvorrichtung von Fig. 12,
Fig. 14 eine schematische Schnittansicht des Bereichs von Fig. 13 mit dem Akkupack von Fig. 12 in Andocklage,
Fig. 15 die Ansicht von Fig. 14 mit dem Akkupack in Traglage,
Fig. 16 eine Detailschnittansicht einer Rückentragvorrichtung ähnlich Fig. 5 mit einem modifizierten Festhaltehebel mit Anlaufflächen-Wendepunkt und Ausschwenkhilfe in einer Einschwenkposition auf Höhe eines Anlaufflächen-Wendepunktes,
Fig. 17 die Ansicht von Fig. 16 mit dem Festhaltehebel in einer Einschwenkposition direkt hinter dem Wendepunkt,
Fig. 18 die Ansicht von Fig. 16 mit dem Festhaltehebel in einer Festhaltestellung,
Fig. 19 die Ansicht von Fig. 16 mit dem Festhaltehebel in einer ersten Ausschwenkstellung,
Fig. 20 die Ansicht von Fig. 16 mit dem Festhaltehebel in einer zweiten Ausschwenkstellung,
Fig. 21 die Ansicht von Fig. 16 mit dem Festhaltehebel in einer dritten Ausschwenkstellung und
Fig. 22 eine schematische Blockdiagrammdarstellung eines Gerätesets mit Rückentragvorrichtung, Akkupack und von letzterem gespeistem Elektrogerät.

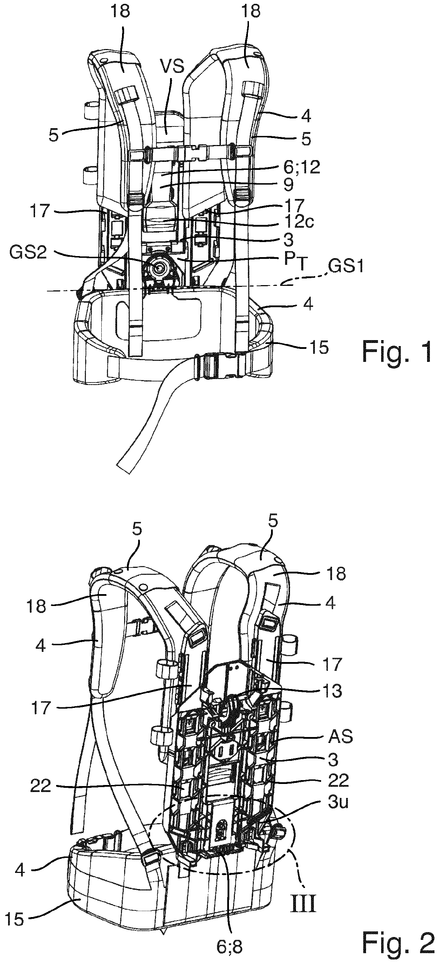

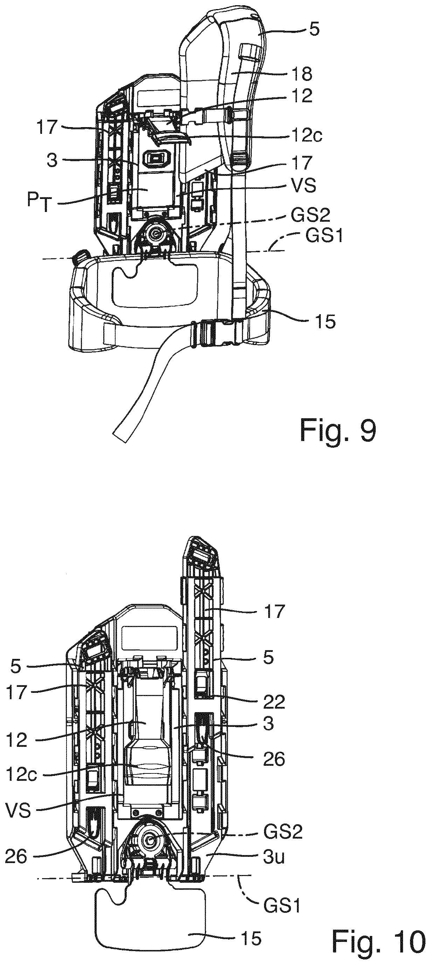

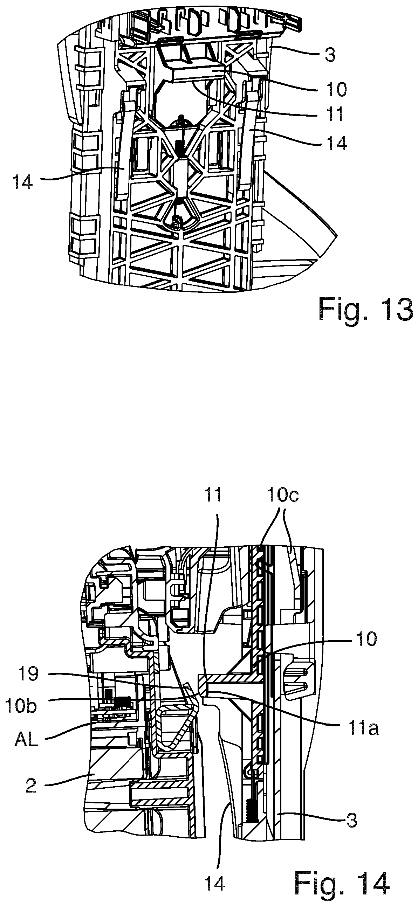

Eine in den Fig. 1 bis 21 in verschiedenen Darstellungen und Ausführungsvarianten veranschaulichte Rückentragvorrichtung ist zum Tragen beliebiger rückentragbarer Gegenstände auf dem Rücken eines Benutzers verwendbar. Dazu weist die Rückentragvorrichtung eine Tragbasis 3 auf, die dazu dient, den zu tragenden Gegenstand aufzunehmen, z.B. durch Befestigen des Gegenstands an der Tragbasis 3 oder dadurch, dass der Gegenstand in einen Aufnahmeraum der Tragbasis 3 analog wie im Fall eines üblichen Rucksacks eingebracht wird. In vorteilhaften Realisierungen besitzt die Tragbasis 3 eine plattenförmige Struktur, wie gezeigt. Alternativ kann sie eine beliebige andere Struktur haben, wie sie für dieses Funktionsbauteil von Rückentragvorrichtungen der vorliegend betrachteten Art dem Fachmann an sich bekannt sind, was hier keiner näheren Erläuterungen bedarf. Weiter beinhaltet die Rückentragvorrichtung eine Traggurteinheit 4 für die Tragbasis 3. Mit der Traggurteinheit 4 kann der Benutzer die Tragbasis 3 mit dem an oder in ihr befindlichen Gegenstand auf dem Rücken tragen.

In entsprechenden Ausführungen ist die Rückentragvorrichtung wie gezeigt zum Tragen eines Akkupacks 2 ausgelegt, bei dem es sich insbesondere um einen rückentragbaren Akkupack zur elektrischen Energieversorgung handgeführter Elektrogeräte, wie elektrisch angetriebener Garten- und/oder Forstbearbeitungsgeräte, handeln kann. Dazu weist die Rückentragvorrichtung in solchen Ausführungsformen eine Haltevorrichtung 6 zum lösbaren Halten des Akkupacks 2 in einer Traglage 7 an der Tragbasis 3 auf.

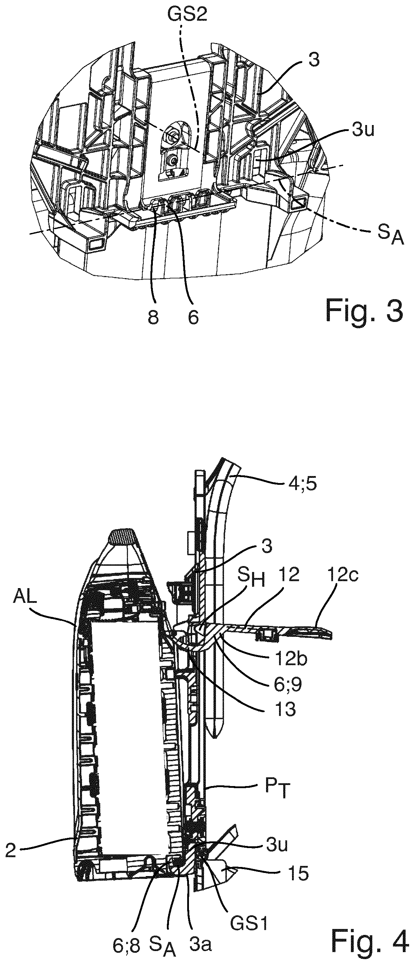

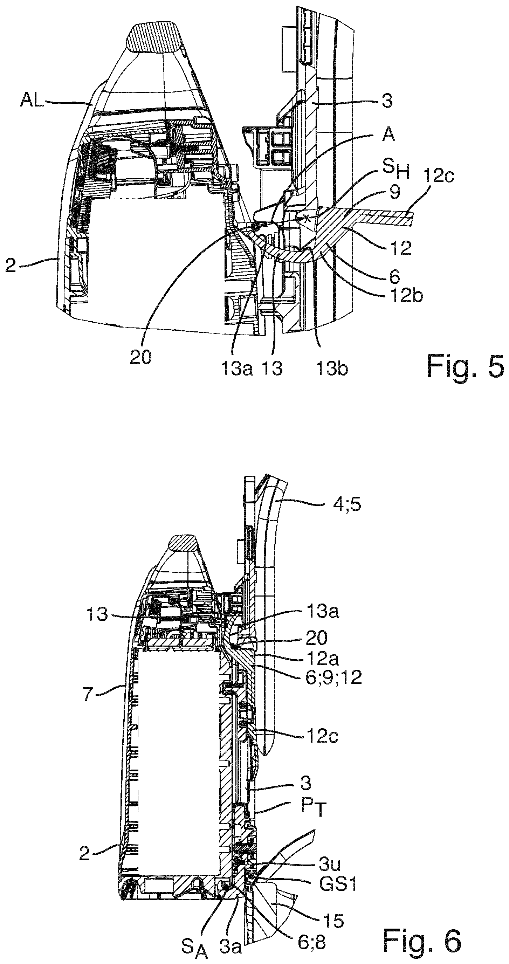

Die Haltevorrichtung 6 umfasst eine Andockeinrichtung 8 an der Tragbasis 3 zum schwenkbeweglichen Andocken des Akkupacks 2 in einer Andocklage AL, wie sie beispielsweise in den Fig. 4, 5, 12 und 14 gezeigt ist, und eine Festhalteeinrichtung 9 an der Tragbasis 3 zum Festhalten des Akkupacks 2 in der gegenüber der Andocklage AL zur Tragbasis 3 hin eingeschwenkten Traglage 7, wie sie beispielsweise in den Fig. 6, 7 und 15 gezeigt ist. Die Andockeinrichtung 8 ist an einem unteren Bereich 3c der Tragbasis 3 angeordnet.

In entsprechenden Ausführungen stellt die Andockeinrichtung 8 eine zu einer Unterseite 3a der Tragbasis 3 im Wesentlichen parallele Schwenkachse S_{A} für die Schwenkbewegung des Akkupacks 2 in die Traglage 7 bereit, wie dies beispielsweise in den Fig. 3, 4, 6 und 11 zu erkennen ist. In vorteilhaften Realisierungen befindet sich diese Schwenkachse S_{A} direkt an der Tragbasis-Unterseite 3a oder mit nur relativ geringem vertikalem Abstand über dieser.

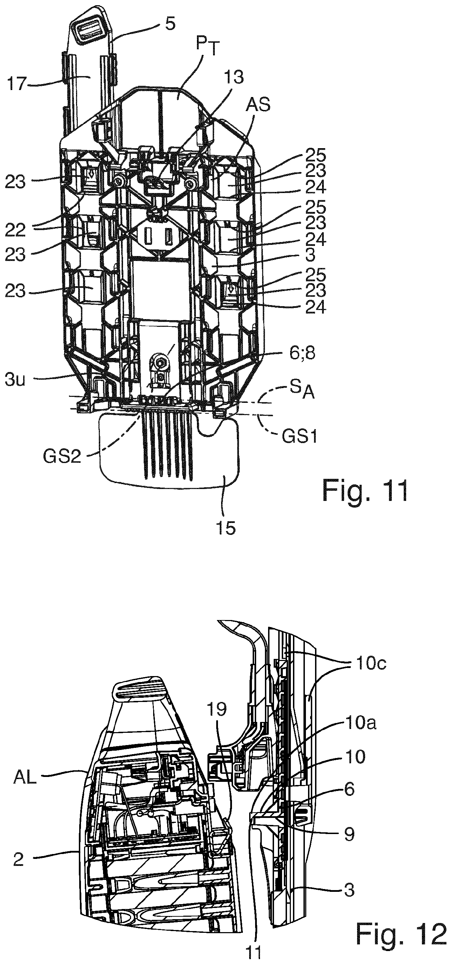

In einer entsprechenden Ausführungsform beinhaltet die Festhalteeinrichtung 9 einen an der Tragbasis 3 zwischen einer Freigabestellung und einer Festhaltestellung 10a verschieblich angeordneten Festhalteschieber 10 mit einem Festhaltehaken 11, der zum festhaltenden Hintergreifen eines korrespondierenden Festhaltegegenelements 19 des Akkupacks 2 in der Traglage 7 ausgelegt ist. Eine solche Realisierung ist in den Fig. 12 bis 15 veranschaulicht. Die nicht explizit gezeigte Freigabestellung befindet sich vertikal oberhalb der gezeigten Festhaltestellung 10a.

In entsprechenden Ausführungen befindet sich bei nicht angedocktem Akkupack 2 der Festhalteschieber 10 in der Festhaltestellung 10a, und der Festhalteschieber 10 weist eine Anlaufschräge 10b auf, die dafür ausgelegt ist, durch Zusammenwirken mit dem Festhaltegegenelement 19 des Akkupacks 2 den Festhalteschieber 10 beim Einschwenken des angedockten Akkupacks 2 in Richtung Traglage 7 selbsttätig in Richtung Freigabestellung zu verschieben. Optional ist ein nicht gezeigtes elastisches Vorspannelement an der Tragbasis 3 angeordnet, das den Festhalteschieber in Richtung seiner Festhaltestellung 10a vorspannt. Beim Einschwenken des Akkupacks 2 in seine Traglage 7 wird dann der Festhalteschieber 10 gegen die Wirkung des Vorspannelements von seiner Festhaltestellung 10a in seine Freigabestellung verschoben, so dass der Akkupack 2 vollständig in seine Traglage 7 eingeschwenkt werden kann, wonach das Vorspannelement den Festhalteschieber 10 selbsttätig in seine Festhaltestellung 10a zurückbringt.

In entsprechenden Realisierungen ist der Festhaltehaken 11 wie im Beispiel der Fig. 12 bis 15 mit einer Innenseite 11a schräg verlaufend gestaltet, so dass er nach Art eines Fanghakens das Festhaltegegenelement 19 des Akkupacks 2 gegen in Ausschwenkrichtung wirkende Kräfte sicher gefangen hält. Mit anderen Worten wirkt diese Fangschrägen-Innenseite 11a des Festhaltehakens 11 einem unbeabsichtigten Herausgleiten des Akkupacks 2 aus seiner Traglage 7 entgegen.

In einer alternativen Ausführung der Festhalteeinrichtung 9 weist diese einen an der Tragbasis 2 zwischen einer Freigabestellung 12b und einer Festhaltestellung 12a schwenkbeweglich angeordneten Festhaltehebel 12 mit einem Festhaltebügel 13 auf, der zum festhaltenden Hintergreifen eines korrespondierenden Festhaltegegenelements 20 des Akkupacks 2 in der Traglage 7 ausgelegt ist. Eine derartige Realisierung der Festhalteeinrichtung 9 ist in den Fig. 1, 2, 4 bis 7, 9 bis 11 und 16 bis 22 zu erkennen.

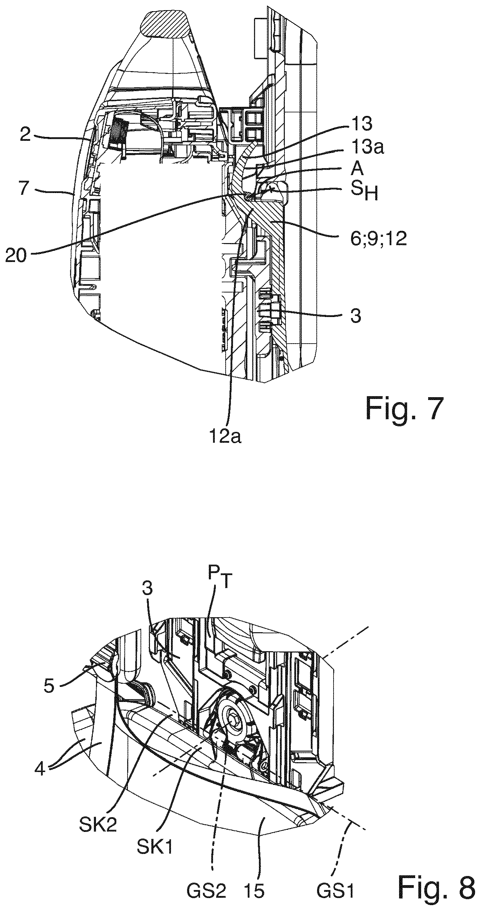

In entsprechenden Ausführungen weist der Festhaltebügel 13 wie gezeigt eine bogenförmig mit nicht-konstantem Abstand von einer Schwenkachse S_{H} des Festhaltehebels verlaufende Anlauffläche 13a auf. Das Festhaltegegenelement 20 des Akkupacks 2 liegt mit einem Abstand A von der Schwenkachse S_{H} des Festhaltehebels 12 gegen die Anlauffläche 13a des Festhaltebügels 13 an, wobei dieser Abstand A mit zunehmendem Verschwenken des Festhaltehebels 12 in Richtung Festhaltestellung 12a abnimmt. Beim Ausführungsbeispiel der Fig. 4 bis 7 nimmt dieser Abstand A auf der gesamten Länge der Anlauffläche 13a bis zu ihrem mit der Festhaltestellung des Festhaltehebels korrespondierenden Endpunkt ab. Dadurch ist dieser Abstand A in der Traglage 7 des Akkupacks 2 bzw. in der Festhaltestellung 12a des Festhaltehebels 12 minimal, wie in Fig. 7 gezeigt, während er demgegenüber in der Andocklage AL des Akkupacks 2 deutlich größer ist, in welcher sich der Akkupack 2 befindet, wenn sein Festhaltegegenelement 20 gerade in den Bereich des Festhaltehebels 12 bzw. von dessen Festhaltebügel 13 gelangt, wie in Fig. 5 gezeigt. Dies stellt eine vorteilhafte Kraftverlaufscharakteristik für die vom Festhaltehebel 12 auf den Akkupack 2 während des Einschwenkens von der Andocklage AL in die Traglage 7 ausgeübte Kraft dar.

Optional kann der Festhaltehebel 12, wie für das Ausführungsbeispiel der Fig. 4 bis 7 gezeigt, an seinem festhalteseitigen Ende der Anlauffläche 13a mit einer Rastschulter 13b oder dergleichen versehen sein, um den Akkupack 2 zusätzlich in der Traglage 7 gegen unabsichtliches Ausschwenken zu sichern.

In entsprechenden Ausführungen weist der Festhalteschieber 10 oder der Festhaltehebel 12 ein nutzerbetätigtes Bedienelement 10c, 12c auf, das sich an einer von einer Akkupack-Ankoppelseite AS der Tragbasis 3 abgewandten Seite VS der Tragbasis 3 befindet. Die Ankoppelseite AS kann insbesondere eine dem Rücken des Benutzers abgewandte Rückseite der Tragbasis 3 sein, wobei dann die von der Ankoppelseite AS abgewandte Seite VS der Tragbasis 3 eine dem Rücken eines Benutzers beim Tragen der Rückentragvorrichtung zugewandte Vorderseite der Tragbasis 3 ist. Der Festhalteschieber 10 bzw. der Festhaltehebel 12 kann in diesem Fall vom Benutzer durch das Bedienelement 10c, 12c an der Vorderseite RS der Tragbasis 3 von der Festhaltestellung 10a, 12a in die Freigabestellung 12b bewegt werden, um ein Ausschwenken des Akkupacks 2 von seiner Traglage 7 in seine Andocklage AL und ein anschließendes Abnehmen des Akkupacks 2 von der Tragbasis 3 zu erlauben. In alternativen Ausführungen ist der Festhalteschieber 10 bzw. der Festhaltehebel 12 in anderer Weise vom Benutzer aus der Festhaltestellung 10a, 12a in die Freigabestellung 12b verlagerbar.

In entsprechenden Ausführungen weist die Haltevorrichtung 6 eine Abstützfederanordnung 14 auf, die eine elastische Abstützung mit einer in Ausschwenkrichtung wirkenden Federkraft für den Akkupack 2 in seiner Traglage 7 bereitstellt. Durch diese Abstützfederanordnung 14 kann der Akkupack 2 folglich federelastisch gegen die Tragbasis 2 anliegen, wenn er sich in seiner Traglage 7 befindet, so dass die Abstützfederanordnung 14 Stöße vom Akkupack 2 auf die Tragbasis 3 und umgekehrt absorbieren bzw. mindern kann. Zudem eignet sich die Abstützfederanordnung 14 dafür, den Akkupack 2 spielfrei in seiner Traglage 7 an der Tragbasis 2 zu halten. Die Abstützfederanordnung 14 kann beispielsweise eine Anordnung von einer oder mehreren an der Tragbasis 3 angeordneten Blattfedern beinhalten, wie in den Fig. 12 bis 15 zu erkennen. In alternativen Ausführungen kann die Abstützfederanordnung zusätzlich oder alternativ zu Blattfedern eine Anordnung von einem oder mehreren an der Tragbasis angeordneten Gummipuffern, insbesondere Rundgummipuffern, beinhalten.

In entsprechenden Ausführungsformen umfasst die Rückentragvorrichtung die Tragbasis 3 und die Traggurteinheit 4 in einer Realisierung, in der die Traggurteinheit 4 eine Schultergurteinheit 5, eine Beckengurteinheit 15 und eine Gelenkeinheit aufweist, welche die Beckengurteinheit 15 gelenkig mit der Tragbasis 3 verbindet. Die Gelenkeinheit beinhaltet ein Doppelgelenk 16, durch das die Beckengurteinheit 15 um zwei Schwenkachsen GS1, GS2 schwenkbeweglich mit der Tragbasis 3 verbunden ist, wie insbesondere aus den Fig. 1 und 8 bis 10 zu erkennen. Die Schwenkachse GS1 verläuft im Wesentlichen parallel zu einer Plattenebene P_{T} der Tragbasis 3, während die andere Schwenkachse GS2 im Wesentlichen senkrecht zu dieser Plattenebene P_{T} der Tragbasis 3 verläuft. Mittels dieses Doppelgelenks 16 kann somit die Beckengurteinheit 15 in jeweils gewünschtem Maß sowohl um die vorzugsweise horizontale Schwenkachse GS1 in Richtung Vorderseite RS bzw. Rückseite AS der Tragbasis 3 als auch um die vorzugsweise ebenfalls horizontale Schwenkachse GS2 lateral gegenüber der Tragbasis 3 verschwenkt werden. Vorzugsweise ist die Gelenkeinheit bzw. das Doppelgelenk 16 durch ein eigenständiges Bauteil gebildet, das einerseits an der Beckengurteinheit 15 und andererseits an der Tragbasis 3 befestigt ist, wie im gezeigten Ausführungsbeispiel.

In vorteilhaften Ausführungen verläuft die Schwenkachse GS1 im Wesentlichen zwischen und parallel zu zwei zueinander zugewandten Seitenkanten SK1, SK2 der Beckengurteinheit 15 einerseits und der Tragbasis 3 andererseits, wie insbesondere aus den Fig. 8 bis 11 ersichtlich, und die Schwenkachse GS2 verläuft gegenüber dieser Schwenkachse GS1 in von der Beckengurteinheit 15 abgewandter Richtung versetzt, im gezeigten Ausführungsbeispiel speziell nach oben versetzt. Dies ergibt eine für entsprechende Anwendungen optimale Bewegungskinematik für die Beckengurteinheit 15 gegenüber der Tragbasis 3. In entsprechenden Realisierungen bildet die Tragbasis 3 ein starres bzw. biegesteifes Bauteil, alternativ ist sie als biegeweiches Bauteil realisierbar.

In entsprechenden Ausführungsformen beinhaltet die Rückentragvorrichtung die Tragbasis 3 und die Traggurteinheit 4 in einer Realisierung, in der die Traggurteinheit mindestens eine Schultergurteinheit 5 aufweist, die lösbar mit der Tragbasis 3 verbindbar ist. Die Schultergurteinheit 5 umfasst in diesen Ausführungen mindestens einen biegesteifen Gurthalter 17, der mittels eines Rastmechanismus 22 in mehreren unterschiedlichen Höhen lösbar verrastend an der Tragbasis 3 anbringbar ist und mindestens einen mit dem Gurthalter 17 verbindbaren flexiblen Gurtriemen 18 umfasst. Der Gurthalter 17 stellt folglich in diesem Fall ein gegenüber dem flexiblen Gurtriemen 18 steifes, starres Bauteil dar. Die gezeigten Ausführungsbeispiele beinhalten diesen Typ von Schultergurteinheit 5, wie aus den entsprechenden Figuren ersichtlich. In entsprechenden Realisierungen beinhaltet die Schultergurteinheit 5 nur einen biegesteifen Gurthalter, an dem beispielsweise zwei flexible Gurtriemen zum Tragen durch den Benutzer angeordnet sein können, oder die Schultergurteinheit 5 beinhaltet wie gezeigt zwei biegesteife Gurthalter 17, mit dem jeweils ein flexibler Gurtriemen 18 oder ein gemeinsamer Gurtriemen verbindbar ist.

In vorteilhaften Ausführungen stellt der Rastmechanismus 22 mehrere Rastungen 23 für den mindestens einen Gurthalter 17 in unterschiedlichen Höhen an der Tragbasis 3 bereit. Die jeweilige Rastung 23 beinhaltet eine Rastfreigabeposition 24 und eine gegenüber der Rastfreigabeposition nach oben versetzte Rasthalteposition 25. Der Gurthalter 17 ist an der Tragbasis 2 jeweils zwischen der Rastfreigabeposition 24 und der Rasthalteposition 25 der gewählten Rastung 23 höhenverschiebbar. In der Rastfreigabeposition 24 kann der Gurthalter 17 in der gewünschten Höhe an die Tragbasis 3 angesetzt bzw. von dieser abgenommen werden. In der Rasthalteposition 25 ist der Gurthalter 17 verrastend mit der Tragbasis 3 verbunden und damit gegen ein Lösen von der Tragbasis 3 gesichert. Gelöst werden kann der Gurthalter 17 von der Tragbasis 3 nur dann, wenn er zuvor von der Rasthalteposition 25 in die Rastfreigabeposition 24 nach unten verschoben wird. Dies hat den Vorteil, dass das Gewicht der Tragbasis 3, das nach unten wirkt und daher versucht, die Tragbasis 3 relativ zu dem über die restliche Schultergurteinheit 5 vom Benutzer gehaltenen Gurthalter 17 nach unten zu verlagern, kein versehentliches Lösen des Gurthalters 17 von der Tragbasis 3 verursachen kann. Vielmehr wird der Gurthalter 17 durch das Gewicht der Tragbasis 3, zu dem auch das Gewicht eines daran gehaltenen oder von ihr aufgenommenen Gegenstands gehört, sicher in seiner Rasthalteposition 25 gehalten.

In vorteilhaften Ausführungen weist der Rastmechanismus 22 eine Rastverriegelung 26 auf, die den mindestens einen Gurthalter 17 in der jeweiligen Rasthalteposition 25 verriegelt hält. In der gezeigten Realisierung ist die Rastverrriegelung 26 durch einen Verriegelungsknopf gebildet, der vom Benutzer entriegelnd betätigt werden kann. Wenn der Benutzer die Verriegelung des Gurthalters 17 in seiner Rasthalteposition 25 lösen will, um den Gurthalter 17 von seiner Rasthalteposition 25 in seine Rastfreigabeposition 24 verbringen zu können, drückt er den Verriegelungsknopf.

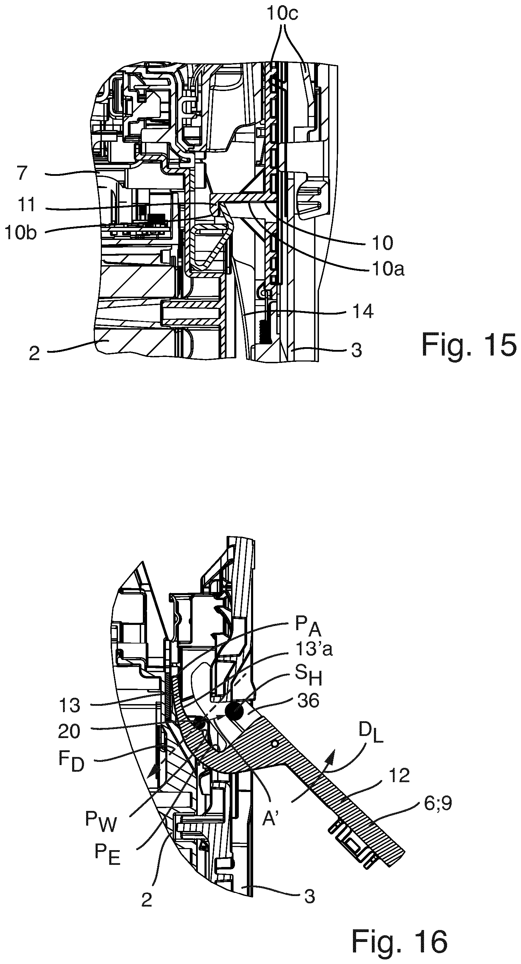

In entsprechenden Ausführungsformen weist der Festhaltebügel 13, wie für das Ausführungsbeispiel der Fig. 16 bis 21 gezeigt, eine bogenförmig mit nicht-konstantem Abstand von der Schwenkachse S_{H} des Festhaltehebels 12 verlaufende Anlauffläche 13'a auf, gegen die das Festhaltegegenelement 20 des Akkupacks 2 anlegbar ist, wobei sich die Anlauffläche 13'a von einem der Freigabestellung 12b des Festhaltehebels 12, wie sie in Fig. 5 für das dortige Ausführungsbeispiel gezeigt ist, entsprechenden Anfangspunkt P_{A} bis zu einem der Festhaltestellung 12a des Festhaltehebels 12 entsprechenden Endpunkt P_{E} erstreckt und ein Abstand A' eines Anlaufkontaktpunkts K_{A} der Anlauffläche 13'a mit dem Festhaltegegenelement 20 mit zunehmendem Verschwenken des Festhaltehebels 12 in Richtung Festhaltestellung 12a vom Anfangspunkt P_{A} bis zum Erreichen eines Wendepunkts P_{W} der Anlauffläche 13'a abnimmt. Die Anlauffläche 13'a ist am Wendepunkt P_{W} zur Bereitstellung einer Umkehr eines vom Festhaltegegenelement 20 auf den Festhaltehebel 12 ausübbaren Drehmoments von einem in Richtung Freigabestellung 12b wirkenden Drehmoment D_{L} in ein in Richtung Festhaltestellung 12a wirkendes Drehmoment D_{Z} eingerichtet.

Der Abstand A' des Anlaufkontaktpunkts K_{A} der Anlauffläche 13'a entspricht dem Abstand A der Anlauffläche 13a von der Schwenkachse S_{H} beim Ausführungsbeispiel der Fig. 4 bis 7, wobei der Abstand A' mit zunehmendem Verschwenken des Festhaltehebels 12 in Richtung Festhaltestellung 12a nur in einem eintrittsseitigen Bereich bis zum Erreichen des Wendepunkts P_{W} abnimmt. Direkt nach dem Wendepunkt P_{W} nimmt der Abstand A' jedenfalls zunächst geringfügig zu, bevor er dann bis zum Erreichen der Festhaltestellung 12a durch den Festhaltehebel 12 wieder abnimmt.

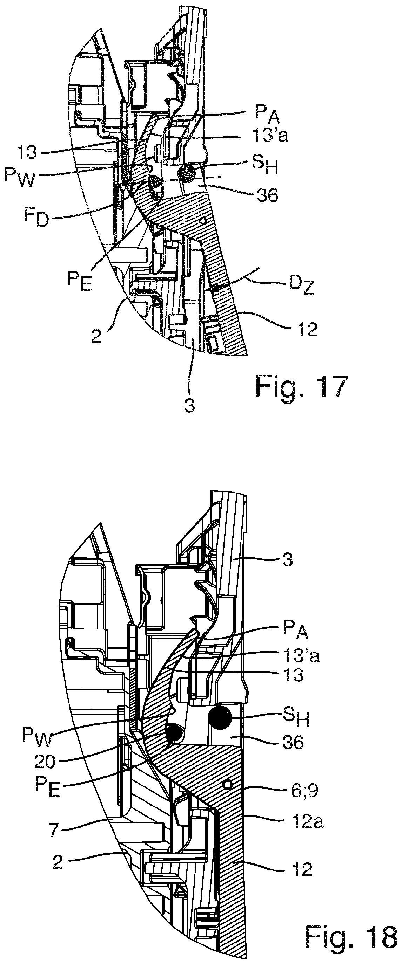

Die Fig. 16 und 17 veranschaulichen die erwähnte Drehmomentumkehr. In Fig. 16 befindet sich der Festhaltehebel 12 in einer Stellung, an welcher der Anlaufkontaktpunkt K_{A} der Anlauffläche 13'a, der mit zunehmendem Verschwenken des Festhaltehebels 12 in Richtung Festhaltestellung 12a vom Anfangspunkt P_{A} bis zum Endpunkt P_{E} wandert, direkt am bzw. kurz vor dem Wendepunkt P_{W} liegt. In dieser Lage des Festhaltehebels 12 übt das Festhaltegegenelement 20, wenn auf den Akkupack 2 eine in Richtung Andocklage AL, d.h. in Ausschwenkrichtung, weisende Kraft ausgeübt wird, sei es durch einen Benutzer oder durch die Gewichtskraft des Akkupacks 2, eine Kraft F_{D} aus, deren in Fig. 16 gestrichelt gezeigte Wirkungslinie auf der dem Anfangspunkt P_{A} der Anlauffläche 13'a zugewandten Seite der Schwenkachse S_{H} mit Abstand von der Schwenkachse S_{H} verläuft, so dass die Kraft F_{D} in diesem Fall das in Richtung Freigabestellung 12b wirkende Drehmoment D_{L} bewirkt. In Fig. 17 befindet sich der Anlaufkontaktpunkt K_{A} der Anlauffläche 13'a mit dem Festhaltegegenelement 20 direkt hinter dem Wendepunkt P_{W}, d.h. an der dem Endpunkt PE der Anlauffläche 13'a zugewandten Seite des Wendepunkts PW. In dieser Lage verläuft die betreffende Kraft F_{D}, die der in Ausschwenkrichtung kraftbelastete Akkupack 2 mit seinem Festhaltegegenelement 20 auf den Festhaltehebel 12 und speziell auf dessen Festhaltebügel 13 ausübt, entlang einer wiederum gestrichelt angegebenen Wirkungslinie, die nunmehr auf der anderen, dem Anfangspunkt P_{A} der Anlauffläche 13'a abgewandten Seite der Schwenkachse S_{H} mit Abstand von der Schwenkachse S_{H} liegt. Dies hat zur Folge, dass in diesem Fall die Kraft F_{D} das in Richtung Festhaltestellung 12a wirkende Drehmoment D_{Z} auf den Festhaltehebel 12 ausübt. Diese Drehmomentumkehr wird durch die hierfür geeignet gewählte Kontur der Anlauffläche 13'a im Bereich des Wendepunkts P_{W} bereitgestellt, die im gezeigten Beispiel eine Konturänderung der Anlauffläche 13'a von einem mit zunehmendem Verschwenken des Festhaltehebels 12 in Richtung Festhaltestellung 12a abnehmenden Betrag des Abstands A' des Anlaufkontaktpunkts K_{A} von der Schwenkachse S_{H} in einen zunehmenden Betrag dieses Abstands A' am Wendepunkt P_{W} beinhaltet.

Diese Drehmomentumkehr am Wendepunkt P_{W} hat zur Folge, dass eine am Akkupack 2 in Ausschwenkrichtung wirkende Kraft, sei es durch einen Benutzer oder durch die Gewichtskraft des Akkupacks 2, nur so lange, wie das Festhaltegegenelement 20 den Wendepunkt P_{W} in Richtung Endpunkt P_{E} nicht überschritten hat, dazu führt, dass sich der Festhaltehebel 12 in Richtung Freigabestellung 12b bewegt und sich dadurch der Akkupack 2 in seine ausgeschwenkte Andocklage AL, wie in Fig. 5 gezeigt, bewegt. Sobald das Festhaltegegenelement 20 den Wendepunkt P_{W} in Richtung Endpunkt P_{E} überschritten hat, drückt der Akkupack 2 mit seinem Festhaltegegenelement 20 unter der Einwirkung einer solchen Zugkraft in Ausschwenkrichtung den Festhaltehebel 12 in Richtung seiner Festhaltestellung 12b, so dass der Festhaltehebel 12 mit seinem Festhaltebügel 13 das Festhaltegegenelement 20 an einem Überschreiten des Wendepunkts P_{W} in Richtung Anfangspunkt P_{A} der Anlauffläche 13'a hindert. Mit anderen Worten wird der Akkupack 2 unter der Wirkung einer solchen Zugkraft in Ausschwenkrichtung durch diese Wendepunktkontur der Anlauffläche 13'a daran gehindert, über die durch die Anlage seines Festhaltegegenelements 20 am Wendepunkt P_{W} definierte Ausschwenkstellung weiter bis zur Andocklage AL selbsttätig auszuschwenken.

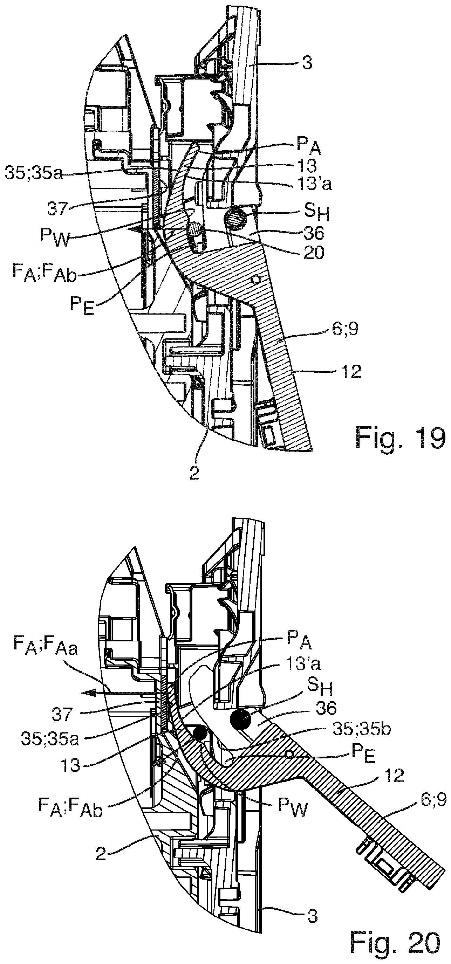

In entsprechenden Ausführungsformen weist der Festhaltehebel 12, wie für das Ausführungsbeispiel der Fig. 16 bis 21 gezeigt, eine Auswerferkontur 35 auf, die dafür eingerichtet ist, beim Verschwenken des Festhaltehebels 12 in Richtung Freigabestellung 12b eine in Richtung Andocklage AL wirkende Auswerferkraft F_{A} auf den Akkupack 2 auszuüben. Durch die Bereitstellung dieser Auswerferkraft F_{A} ist der Festhaltehebel 12 in der Lage, mit seinem Verschwenken in Richtung Freigabestellung 12b das Ausschwenken des Akkupacks 2 von seiner Traglage 7 in seine Andocklage AL zu unterstützen. Die Auswerferkraft F_{A} kann beispielsweise zur Überwindung von Reibungskräften zwischen Teilen des Akkupacks 2 und angrenzenden Teilen der Tragbasis 3 und in jedem Fall zur Verringerung einer vom Benutzer aufzuwendenden Ausschwenkkraft auf den Akkupack 2 genutzt werden. Die Fig. 19 bis 21 veranschaulichen die damit bewirkbare Auswurf- bzw. Ausschwenkbewegung aus der in Fig. 18 gezeigten Traglage 7.

In vorteilhaften Ausführungen beinhaltet die Auswerferkontur 35 eine auf eine Gegenanlagefläche 37 des Akkupacks 2 wirkende Auswurfdruckfläche 35a auf einer der Anlauffläche 13'a abgewandten Seite des Festhaltebügels 13, wie beim Ausführungsbeispiel der Fig. 16 bis 21, und/oder eine auf das Festhaltegegenelement 20 des Akkupacks 2 wirkende Auswurfdruckfläche 35b auf einer der Anlauffläche 13'a zugewandten Seite eines Auswerfernockens 36 des Festhaltehebels 12, wie ebenfalls für das Ausführungsbeispiel der Fig. 16 bis 21 gezeigt. In alternativen Ausführungen beinhaltet die Auswerferkontur 35 nur die Auswurfdruckfläche 35a oder nur die Auswurfdruckfläche 35b.

Im Ausführungsbeispiel der Fig. 16 bis 21 ist der Auswerfernocken 36 derart gestaltet, dass er mit seiner Auswurfdruckfläche 35b beim Verschwenken des Festhaltehebels 12 in Freigabestellung 12b während der gesamten Hebelschwenkbewegung gegen das Festhaltegegenelement 20 des Akkupacks andrückt und somit über den gesamten Bewegungsweg des Schwenkhebels 12 von seiner Festhaltestellung 12a in seine Freigabestellung 12b eine in Richtung Andocklage AL wirkende Ausschwenkkraft F_{Ab} auf den Akkupack 2 als ein Bestandteil der Auswerferkraft F_{A} ausübt. Dazu liegt die Auswurfdruckfläche 35b mit einem an ihr nach Art des Anlaufkontaktpunkts K_{A} der Anlauffläche 13'a entlangwandernden Andrückkontaktpunkt K_{D} gegen das Festhaltegegenelement 12 an, wobei ein Abstand dieses zur Auswurfdruckfläche 35b gehörigen Andrückkontaktpunkts K_{D} zur Schwenkachse S_{H} mit zunehmendem Verschwenken des Festhaltehebels 12 in Richtung Freigabestellung 12b zunimmt.

Bei der in den Fig. 19 bis 21 veranschaulichten Ausschwenkbewegung ist der Kontakt zwischen dem Festhaltegegenelement 20 des Akkupacks 2 und dem Festhaltebügel 13 des Festhaltehebels 12 aufgehoben, d.h. beim Ausschwenken des Akkupacks 2 liegt keine Kraft zwischen dem Festhaltegegenelement 20 einerseits und dem Festhaltebügel 13 andererseits vor. Im gezeigten Ausführungsbeispiel begrenzen die Anlauffläche 13'a des Festhaltebügels 13 einerseits und die Auswurfdruckfläche 35b des Auswerfernockens 36 andererseits einen Bewegungsschlitzbereich mit einer gegenüber dem Durchmesser des Festhaltegegenelements 20 ausreichend größeren Schlitzweite, so dass sich das Festhaltegegenelement 20 in gewünschter Weise innerhalb dieses Bewegungsschlitzbereichs bewegen kann, wenn der Festhaltehebel 12 in Richtung Festhaltestellung 12a bzw. in Richtung Freigabestellung 12b verschwenkt wird.

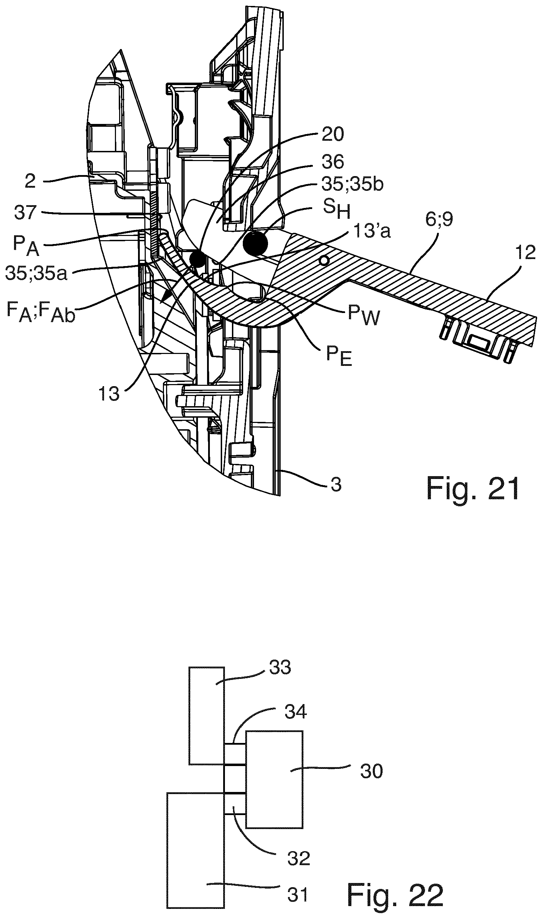

Die am Festhaltebügel 13 außenseitig ausgebildete Auswurfdruckfläche 35a wirkt im gezeigten Beispiel mit der Gegenanlagefläche 36 des Akkupacks 2 nur in einem Teilbereich der gesamten Schwenkbewegung des Festhaltehebels 12 von seiner Festhaltestellung 12a in seine Freigabestellung 12b zusammen. Wie in den Fig. 19 bis 21 veranschaulicht, übt in einer ersten Phase der Ausschwenkbewegung des Festhaltehebels 12 aus seiner Festhaltestellung 12a zunächst nur die Auswurfdruckfläche 35b des Auswerfernockens 36 ihre Ausschwenkkraft F_{Ab} auf das Festhaltegegenelement 20 und damit auf den Akkupack 2 aus, während die Auswurfdruckfläche 35a des Festhaltebügels 13 noch von der Gegenanlagefläche 37 des Akkupacks 2 beabstandet ist. In einer mittleren, in Fig. 20 veranschaulichten Phase der Schwenkbewegung des Festhaltehebels 12 in Richtung seiner Freigabestellung 12b kommt dann die Auswurfdruckfläche 35a des Festhaltebügels 13 gegen die Gegenanlagefläche 37 des Akkupacks 2 zur Anlage und übt eine Ausschwenkkraft F_{Aa} als weitere Komponente der gesamten Auswerferkraft F_{A} des Festhaltehebels 12 auf den Akkupack 2 aus. In einer letzten, in Fig. 21 veranschaulichten Phase der Schwenkbewegung des Festhaltehebels 12 in seine Freigabestellung 12b hat sich die Auswurfdruckfläche 35a des Festhaltebügels 13 wieder von der Gegenanlagefläche 37 des Akkupacks entfernt, so dass in dieser Schwenkbewegungsphase wie in der ersten Schwenkbewegungsphase gemäß Fig. 19 nur die Auswurfdruckfläche 35b des Auswerfernockens 36 mit ihrer Ausschwenkkraft F_{Ab} zur Auswerferkraft F_{A} beiträgt, d.h. die Auswerferkraft F_{A} bildet.

So kann je nach Systemauslegung und Anwendungsfall die Auswerferkraft F_{A} abhängig von der Schwenklage des Festhaltehebels 12 nur von der Auswurfdruckfläche 35b des Auswerfernockens 36 oder nur von der Auswurfdruckfläche 35a des Festhaltebügels 13 oder von beiden Auswurfdruckflächen 35a, 35b gemeinsam bereitgestellt werden. Beispielsweise kann eine gemeinsame Wirkung beider Auswurfdruckflächen 35a, 35b in Schwenklagen des Festhaltehebels 12 vorgesehen sein, in denen ein erhöhter Ausschwenkkraftbedarf besteht oder eine der beiden Auswurfdruckflächen 35a, 35b alleine nicht in der Lage ist, die Auswerferkraft F_{A} in gewünschter Stärke bereitzustellen. In alternativen Ausführungen ist nur die Auswurfdruckfläche 35a oder nur die Auswurfdruckfläche 35b ohne die jeweils andere Auswurfdruckfläche vorhanden, und in weiteren alternativen Ausführungen wirkt die Auswurfdruckfläche 35a des Festhaltebügels 13 auf der gesamten Schwenkbewegung des Festhaltehebels 12 von seiner Festhaltestellung 12a in seine Freigabestellung 12b, und in noch weiteren alternativen Ausführungen wirkt die Auswurfdruckfläche 35b des Auswerfernockens 36 nur in einem Teilbereich der Schwenkbewegung des Festhaltehebels 12 von seiner Festhaltestellung 12a in seine Freigabestellung 12b auf das Festhaltegegenelement 20 des Akkupacks 2.

Fig. 22 veranschaulicht blockdiagrammatisch ein Geräteset mit einer Rückentragvorrichtung 1 und mit dem rückentragbaren, an ihr befestigbaren Akkupack 2. Optional umfasst das Geräteset zusätzlich ein vom Akkupack 2 mit elektrischer Energie versorgbares handgeführtes Elektrogerät 27, wie ein elektrisch angetriebenes Garten- und/oder Forstbearbeitungsgerät. Der Akkupack 2 kann in der geschilderten Weise an der Rückentragvorrichtung 1 lösbar angebracht werden. Das Elektrogerät 27 kann mittels einer flexiblen elektrischen Leitung oder alternativ durch eine direkte Steckverbindung elektrisch an den Akkupack 2 und/oder die Rückentragvorrichtung 1 angekoppelt sein. Des Weiteren kann das Elektrogerät 27 je nach Systemausführung mechanisch starr mit dem Akkupack 2 und/oder der Rückentragvorrichtung 1 gekoppelt sein.

Wie die gezeigten und die weiteren oben erwähnten Ausführungsbeispiele deutlich machen, stellt die Erfindung eine Rückentragvorrichtung mit vorteilhaften Funktionsmerkmalen hinsichtlich Ankopplung eines rückentragbaren Akkupacks und je nach Bedarf zusätzlich hinsichtlich Gurthöhenverstellung und/oder Anbindung der Beckengurteinheit an die Tragbasis zur Verfügung. Die Rückentragvorrichtung ist insbesondere zum Tragen eines Akkupacks geeignet, sie ist jedoch je nach Ausführung alternativ oder zusätzlich auch zum Tragen anderer Gegenstände geeignet, die an der Tragbasis angebracht oder in z.B. in einem Behälter oder Beutel der Tragbasis aufgenommen sind.

## Patentansprüche

1. Rückentragvorrichtung für einen rückentragbaren Akkupack zur elektrischen Energieversorgung handgeführter Elektrogeräte, insbesondere elektrisch angetriebener Garten- und/oder Forstbearbeitungsgeräte, wobei die Rückentragvorrichtung
- eine Tragbasis (3),
- eine Traggurteinheit (4) für die Tragbasis (3) und
- eine Haltevorrichtung (6) zum lösbaren Halten des Akkupacks in einer Traglage an der Tragbasis (3) umfasst,
- wobei die Haltevorrichtung (6) eine Andockeinrichtung (8) an der Tragbasis (3) zum schwenkbeweglichen Andocken des Akkupacks in einer Andocklage und eine Festhalteeinrichtung (9) an der Tragbasis (3) zum Festhalten des Akkupacks in der gegenüber der Andocklage zur Tragbasis (3) hin eingeschwenkten Traglage umfasst,
**dadurch gekennzeichnet, dass**
- die Andockeinrichtung (8) an einem unteren Bereich (3u) der Tragbasis (3) angeordnet ist und die Festhalteeinrichtung (9) folgendes aufweist:
- einen an der Tragbasis (3) zwischen einer Freigabestellung und einer Festhaltestellung (10a) verschieblich angeordneten Festhalteschieber (10) mit einem Festhaltehaken (11), der zum festhaltenden Hintergreifen eines korrespondierenden Festhaltegegenelements des Akkupacks in der Traglage ausgelegt ist, wobei sich bei nicht angedocktem Akkupack der Festhalteschieber (10) in der Festhaltestellung (10a) befindet und der Festhalteschieber (10) eine Anlaufschräge (10b) aufweist, die dafür ausgelegt ist, durch Zusammenwirken mit dem Festhaltegegenelement den Festhalteschieber (10) beim Einschwenken des angedockten Akkupacks in Richtung Traglage selbsttätig in Richtung Freigabestellung zu verschieben, oder
- einen an der Tragbasis zwischen einer Freigabestellung (12b) und einer Festhaltestellung (12a) schwenkbeweglich angeordneten Festhaltehebel (12) mit einem Festhaltebügel (13), der zum festhaltenden Hintergreifen eines korrespondierenden Festhaltegegenelements des Akkupacks in der Traglage ausgelegt ist.

2. Rückentragvorrichtung nach Anspruch 1, weiter **dadurch gekennzeichnet, dass** die Andockeinrichtung (8) eine zu einer Unterseite (3a) der Tragbasis (3) im Wesentlichen parallele Schwenkachse (S_{A}) für die Schwenkbewegung des Akkupacks in die Traglage bereitstellt.

3. Rückentragvorrichtung nach Anspruch 1 oder 2, weiter **dadurch gekennzeichnet, dass** der Festhaltebügel (13) eine bogenförmig mit nicht-konstantem Abstand von einer Schwenkachse (S_{H}) des Festhaltehebels (12) verlaufende Anlauffläche (13a) aufweist, gegen die das Festhaltegegenelement mit einem Abstand (A) von der Schwenkachse (S_{H}) anlegbar ist, der mit zunehmendem Verschwenken des Festhaltehebels (12) in Richtung Festhaltestellung (12a) abnimmt.

4. Rückentragvorrichtung nach einem der Ansprüche 1 bis 3, weiter **dadurch gekennzeichnet, dass** der Festhaltebügel (13) eine bogenförmig mit nicht-konstantem Abstand von einer Schwenkachse (S_{H}) des Festhaltehebels (12) verlaufende Anlauffläche (13'a) aufweist, gegen die das Festhaltegegenelement anlegbar ist, wobei sich die Anlauffläche (13'a) von einem Anfangspunkt (P_{A}) bis zu einem der Festhaltestellung (12a) des Festhaltehebels (12) entsprechenden Endpunkt (P_{E}) erstreckt und ein Abstand (A') eines Anlaufkontaktpunktes (K_{A}) der Anlauffläche (13'a) mit dem Festhaltegegenelement von der Schwenkachse (S_{H}) des Festhaltehebels (12) mit zunehmendem Verschwenken des Festhaltehebels (12) in Richtung Festhaltestellung (12a) vom Anfangspunkt (P_{A}) bis zum Erreichen eines Wendepunktes (P_{W}) der Anlauffläche (13'a) abnimmt und die Anlauffläche (13'a) am Wendepunkt (P_{W}) zur Bereitstellung einer Umkehr eines vom Festhaltegegenelement auf den Festhaltehebel (12) ausübbaren Drehmoments von einem in Richtung Freigabestellung (12b) wirkenden Drehmoment (D_{L}) in ein in Richtung Festhaltestellung (12a) wirkendes Drehmoment (D_{Z}) eingerichtet ist.

5. Rückentragvorrichtung nach einem der Ansprüche 1 bis 4, weiter **dadurch gekennzeichnet, dass** der Festhaltehebel (12) eine Auswerferkontur (35) aufweist, die dafür eingerichtet ist, beim Verschwenken des Festhaltehebels (12) in Richtung Freigabestellung (12b) eine in Richtung Andocklage wirkende Auswerferkraft (F_{A}) auf den Akkupack auszuüben.

6. Rückentragvorrichtung nach Anspruch 5, weiter **dadurch gekennzeichnet, dass** die Auswerferkontur (35) eine auf eine Gegenanlagefläche des Akkupacks wirkende Auswurfdruckfläche (35a) auf einer der Anlauffläche (13'a) abgewandten Seite des Festhaltebügels (13) und/oder eine auf das Festhaltegegenelement des Akkupacks wirkende Auswurfdruckfläche (35b) auf einer der Anlauffläche (13a) zugewandten Seite eines Auswerfernockens (36) des Festhaltehebels (12) aufweist.

7. Rückentragvorrichtung nach einem der Ansprüche 1 bis 6, weiter **dadurch gekennzeichnet, dass** der Festhalteschieber oder der Festhaltehebel ein nutzerbetätigtes Bedienelement (10c, 12c) aufweist, das sich an einer von einer Akkupack-Ankoppelseite (AS) der Tragbasis abgewandten Seite (VS) der Tragbasis befindet.

8. Rückentragvorrichtung nach einem der Ansprüche 1 bis 7, weiter **dadurch gekennzeichnet, dass** die Haltevorrichtung eine Abstützfederanordnung (14) aufweist, die eine elastische Abstützung mit einer in Ausschwenkrichtung wirkenden Federkraft für den Akkupack in Traglage bereitstellt.

9. Rückentragvorrichtung nach einem der Ansprüche 1 bis 8, weiter **dadurch gekennzeichnet, dass** die Traggurteinheit (4) eine Schultergurteinheit (5), eine Beckengurteinheit (15) und eine Gelenkeinheit aufweist, welche die Beckengurteinheit gelenkig mit der Tragbasis (3) verbindet, wobei die Gelenkeinheit ein Doppelgelenk (16) beinhaltet, durch das die Beckengurteinheit (15) um zwei Schwenkachsen (GS1, GS2) schwenkbeweglich mit der Tragbasis (3) verbunden ist, wobei die eine (GS1) der beiden Schwenkachsen im Wesentlichen parallel zu einer Plattenebene (P_{T}) der Tragbasis (3) und die andere Schwenkachse (GS2) im Wesentlichen senkrecht zu der Plattenebene der Tragbasis (3) verläuft.

10. Rückentragvorrichtung nach Anspruch 9, weiter **dadurch gekennzeichnet, dass** die Gelenkeinheit durch ein eigenständiges Bauteil gebildet ist, das einerseits an der Beckengurteinheit (15) und andererseits an der Tragbasis (3) befestigt ist.

11. Rückentragvorrichtung nach Anspruch 9 oder 10, weiter **dadurch gekennzeichnet, dass** die eine Schwenkachse (GS1) im Wesentlichen zwischen und parallel zu zwei einander zugewandten Seitenkanten (SK1, SK2) der Beckengurteinheit (15) und der Tragbasis (3) verläuft und die andere Schwenkachse (GS2) gegenüber dieser Schwenkachse (GS1) in von der Beckengurteinheit (15) abgewandter Richtung versetzt verläuft.

12. Rückentragvorrichtung nach einem der Ansprüche 1 bis 11, weiter **dadurch gekennzeichnet, dass** die Traggurteinheit (4) mindestens eine Schultergurteinheit (5) aufweist, die lösbar mit der Tragbasis (3) verbindbar ist, und mindestens einen biegesteifen Gurthalter (17), der mittels eines Rastmechanismus (22) in mehreren unterschiedlichen Höhen lösbar verrastend an der Tragbasis (3) anbringbar ist, und mindestens einen mit diesem verbundenen flexiblen Gurtriemen (18) umfasst.

13. Rückentragvorrichtung nach Anspruch 12, weiter **dadurch gekennzeichnet, dass**
- der Rastmechanismus mehrere Rastungen (23) für den mindestens einen Gurthalter (17) in unterschiedlichen Höhen an der Tragbasis (3) bereitstellt, wobei die jeweilige Rastung eine Rastfreigabeposition (24) und eine gegenüber der Rastfreigabeposition (24) nach oben versetzte Rasthalteposition (25) beinhaltet, zwischen denen der Gurthalter (17) an der Tragbasis (3) höhenverschiebbar ist, und/oder
- der Rastmechanismus eine entriegelbare Rastverrie gelung (26) aufweist, die den mindestens einen Gurthalter (17) in der jeweiligen Rasthalteposition verriegelt hält.

14. Geräteset mit
- einer Rückentragvorrichtung (1) nach einem der Ansprüche 1 bis 13 und
- einem rückentragbaren, an der Rückentragvorrichtung (1) befestigbaren Akkupack (2) zur elektrischen Energieversorgung handgeführter Elektrogeräte, insbesondere elektrisch angetriebener Garten- und Forstbearbeitungsgeräte.

15. Geräteset nach Anspruch 14 mit einem vom Akkupack (2) mit elektrischer Energie versorgbaren handgeführten Elektrogerät (27), insbesondere einem elektrisch angetriebenen Garten- und/oder Forstbearbeitungsgerät.

## Claims

1. Harness for a battery pack configured to be worn on the back and that supplies electrical energy to hand-guided electrical tools, preferably electrically powered gardening and/or forestry tools, wherein the harness comprises
- a support base (3),
- a support strap unit (4) for the support base (3), and
- a holding device (6) for releasably holding the battery pack in a support position on the support base (3),
- wherein the holding device (6) comprises a docking mechanism (8) on the support base (3) for pivotably docking the battery pack in a docking position, and a securing mechanism (9) on the support base (3) for securing the battery pack in the support position pivoted in towards the support base (3) with respect to the docking position,
**characterized in that**
- the docking mechanism (8) is arranged on a lower region (3u) of the support base (3), and the securing mechanism (9) comprises the following:
- a securing slide (10) which is arranged displaceably on the support base (3) between a release position and a securing position (10a) and comprises a securing hook (11), which is designed to engage securely behind a corresponding mating securing element of the battery pack in the support position, wherein, when the battery pack is not docked, the securing slide (10) is located in the securing position (10a), and the securing slide (10) has a run-on bevel (10b) which is designed, by interaction with the mating securing element, to displace the securing slide (10) automatically in the direction of the release position when the docked battery pack is pivoted inwards in the direction of the support position, or
- a securing lever (12) which is arranged pivotably on the support base between a release position (12b) and a securing position (12a) and has a securing bow (13) which is designed to engage securely behind a corresponding mating securing element of the battery pack in the support position.

2. Harness according to Claim 1, further **characterized in that** the docking mechanism (8) provides a pivot axis (S_{A}), substantially parallel to an underside (3a) of the support base (3), for the pivoting movement of the battery pack into the support position.

3. Harness according to Claim 1 or 2, further **characterized in that** the securing bow (13) comprises a run-on face (13a) extending in an arc shape with a non-constant spacing from a pivot axis (S_{H}) of the securing lever (12), the mating securing element being configured to be placed against the run-on face (13a) with a spacing (A) from the pivot axis (S_{H}), which spacing (A) decreases with increasing pivoting of the securing lever (12) in the direction of the securing position (12a).

4. Harness according to any one of Claims 1 to 3, further **characterized in that** the securing bow (13) comprises a run-on face (13'a) extending in an arc shape with a non-constant spacing from a pivot axis (S_{H}) of the securing lever (12), the mating securing element being configured to be placed against the run-on face (13'a), wherein the run-on face (13'a) extends from a start point (P_{A}) as far as to an end point (P_{E}) corresponding to the securing position (12a) of the securing lever (12), and a spacing (A') of a run-on contact point (K_{A}) of the run-on face (13'a) with the mating securing element from the pivot axis (S_{H}) of the securing lever (12) decreases with increasing pivoting of the securing lever (12) in the direction of the securing position (12a) from the start point (P_{A}) until reaching an inflexion point (P_{W}) of the run-on face (13'a), and the run-on face (13'a) is designed at the inflexion point (P_{W}) to provide a reversal of a torque, which is exertable on the securing lever (12) by the mating securing element, from a torque (D_{L}) acting in the direction of the release position (12b) to a torque (D_{Z}) acting in the direction of the securing position (12a).

5. Harness according to any one of Claims 1 to 4, further **characterized in that** the securing lever (12) comprises an ejector contour (35) which, during the pivoting of the securing lever (12) in the direction of the release position (12b), is designed to exert on the battery pack an ejector force (F_{A}) acting in the direction of the docking position.

6. Harness according to Claim 5, further **characterized in that** the ejector contour (35) comprises an ejection pressure face (35a) acting on a mating contact face of the battery pack, on a side of the securing bow (13) directed away from the run-on face (13'a), and/or an ejection pressure face (35b) acting on the mating securing element of the battery pack, on a side of an ejector cam (36) of the securing lever (12) directed towards the run-on face (13a).

7. Harness according to any one of Claims 1 to 6, further **characterized in that** the securing slide or the securing lever comprises a user-actuated control element (10c, 12c) which is located on a side (VS) of the support base directed away from a battery pack coupling side (AS) of the support base.

8. Harness according to any one of Claims 1 to 7, further **characterized in that** the holding device comprises a cushioning spring arrangement (14) which provides the battery pack, in the support position, with elastic cushioning with resilience acting in the outward pivoting direction.

9. Harness according to any one of Claims 1 to 8, further **characterized in that** the support strap unit (4) comprises a shoulder strap unit (5), a waist strap unit (15) and a joint unit which connects the waist strap unit to the support base (3) in an articulated manner, wherein the joint unit comprises a double joint (16) by which the waist strap unit (15) is connected to the support base (3) so as to be pivotable about two pivot axes (GS1, GS2), wherein one (GS1) of the two pivot axes runs substantially parallel to a plate plane (P_{T}) of the support base (3), and the other pivot axis (GS2) runs substantially perpendicularly with respect to the plate plane of the support base (3).

10. Harness according to Claim 9, further **characterized in that** the joint unit is formed by an autonomous component which is fastened on the one hand to the waist strap unit (15) and on the other hand to the support base (3).

11. Harness according to Claim 9 or 10, further **characterized in that** one pivot axis (GS1) runs substantially between and parallel to two mutually facing side edges (SK1, SK2) of the waist strap unit (15) and of the support base (3), and the other pivot axis (GS2) runs, offset with respect to this pivot axis (GS1), in the direction away from the waist strap unit (15).

12. Harness according to any one of Claims 1 to 11, further **characterized in that** the support strap unit (4) comprises at least one shoulder strap unit (5), which is releasably connectable to the support base (3), and comprises at least one flexurally stiff strap holder (17) which, by means of a latch mechanism (22), is configured to be releasably locked at several different heights on the support base (3), and at least one flexible strap web (18) connected to the strap holder (17).

13. Harness according to Claim 12, further **characterized in that**
- the latch mechanism provides several latches (23) for the at least one strap holder (17) at different heights on the support base (3), wherein the respective latch comprises a latch release position (24) and, upwardly offset in relation to the latch release position (24), a latch holding position (25), between which positions the strap holder (17) is vertically displaceable on the support base (3), and/or
- the latch mechanism comprises a releasable snap-in lock (26), which holds the at least one strap holder (17) locked in the respective latch holding position.

14. Tool kit, comprising
- a harness (1) according to any one of Claims 1 to 13, and
- a battery pack (2) configured to be worn on the back and to be secured to the harness (1), said battery pack (4) supplying electrical energy to hand-guided electrical tools, preferably electrically powered gardening and forestry tools.

15. Tool kit according to Claim 14, comprising a hand-guided electrical tool (27) configured to be supplied with electrical energy from the battery pack (2), preferably an electrically powered gardening and/or forestry tool.

## Revendications

1. Dispositif porté sur le dos pour un bloc d'accumulateur pouvant être porté sur le dos pour l'alimentation en énergie électrique d'outils électriques guidés à la main, en particulier d'outils de jardinage et/ou forestiers entraînés électriquement, le dispositif porté sur le dos comportant
- une base de support (3),
- une unité de sangle de support (4) pour la base de support (3) et
- un dispositif de retenue (6) pour retenir de manière amovible le bloc d'accumulateur dans une position de support sur la base de support (3),
- le dispositif de retenue (6) comportant un dispositif d'arrimage (8) sur la base de support (3) pour l'arrimage de manière mobile en pivotement du bloc d'accumulateur dans une position d'arrimage et un dispositif de fixation (9) sur la base de support (3) pour la fixation du bloc d'accumulateur dans la position de support pivotée vers l'intérieur en direction de la base de support (3) par rapport à la position d'arrimage,
**caractérisé en ce que**
- le dispositif d'arrimage (8) est disposé au niveau d'une région inférieure (3u) de la base de support (3) et le dispositif de fixation (9) comprend les éléments suivants :
- un coulisseau de fixation (10) disposé de manière déplaçable sur la base de support (3) entre une position de libération et une position de fixation (10a) et doté d'un crochet de fixation (11) qui est conçu pour venir en prise par l'arrière, en le fixant, avec un élément conjugué de fixation correspondant du bloc d'accumulateur dans la position de support, le coulisseau de fixation (10) se trouvant dans la position de fixation (10a) lorsque le bloc d'accumulateur n'est pas arrimé et le coulisseau de fixation (10) comprenant un biseau de butée (10b) qui est conçu pour, par interaction avec l'élément conjugué de fixation, déplacer le coulisseau de fixation (10) automatiquement en direction de la position de libération lors du pivotement vers l'intérieur du bloc d'accumulateur arrimé en direction de la position de support, ou
- un levier de fixation (12) disposé de manière mobile en pivotement sur la base de support entre une position de libération (12b) et une position de fixation (12a) et doté d'un étrier de fixation (13) qui est conçu pour venir en prise par l'arrière, en le fixant, avec un élément conjugué de fixation correspondant du bloc d'accumulateur dans la position de support.

2. Dispositif porté sur le dos selon la revendication 1, **caractérisé en outre en ce que** le dispositif d'arrimage (8) fournit un axe de pivotement (S_{A}) sensiblement parallèle à un côté inférieur (3a) de la base de support (3) pour le mouvement de pivotement du bloc d'accumulateur dans la position de support.

3. Dispositif porté sur le dos selon la revendication 1 ou 2, **caractérisé en outre en ce que** l'étrier de fixation (13) comprend une surface de butée (13a) s'étendant de manière arquée à une distance non constante d'un axe de pivotement (S_{H}) du levier de fixation (12), surface contre laquelle l'élément conjugué de fixation peut être appliqué à une distance (A) de l'axe de pivotement (S_{H}), laquelle distance diminue au fur et à mesure que le pivotement du levier de fixation (12) en direction de la position de fixation (12a) augmente.

4. Dispositif porté sur le dos selon l'une des revendications 1 à 3, **caractérisé en outre en ce que** l'étrier de fixation (13) comprend une surface de butée (13'a) s'étendant de manière arquée à une distance non constante d'un axe de pivotement (S_{H}) du levier de fixation (12), surface contre laquelle l'élément conjugué de fixation peut être appliqué, la surface de butée (13'a) s'étendant à partir d'un point de départ (P_{A}) jusqu'à un point final (P_{E}) correspondant à la position de fixation (12a) du levier de fixation (12) et une distance (A') d'un point de contact de butée (K_{A}) de la surface de butée (13'a) avec l'élément conjugué de fixation à l'axe de pivotement (S_{H}) du levier de fixation (12) diminuant au fur et à mesure que le pivotement du levier de fixation (12) en direction de la position de fixation (12a) augmente à partir du point de départ (P_{A}) jusqu'à ce qu'un point d'inflexion (P_{W}) de la surface de butée (13'a) soit atteint, et la surface de butée (13'a) étant conçue pour, au point d'inflexion (P_{W}), produire une inversion d'un couple pouvant être exercé par l'élément conjugué de fixation sur le levier de fixation (12) d'un couple (D_{L}) agissant en direction de la position de libération (12b) à un couple (D_{Z}) agissant en direction de la position de fixation (12a).

5. Dispositif porté sur le dos selon l'une des revendications 1 à 4, **caractérisé en outre en ce que** le levier de fixation (12) comprend un contour d'éjection (35) qui est conçu pour, lors du pivotement du levier de fixation (12) en direction de la position de libération (12b), exercer une force d'éjection (F_{A}), agissant en direction de la position d'arrimage, sur le bloc d'accumulateur.

6. Dispositif porté sur le dos selon la revendication 5, **caractérisé en outre en ce que** le contour d'éjection (35) comprend une surface de pression d'éjection (35a) agissant sur une surface d'appui conjuguée du bloc d'accumulateur sur un côté de l'étrier de fixation (13) opposé à la surface de butée (13'a) et/ou une surface de pression d'éjection (35b) agissant sur l'élément conjugué de fixation du bloc d'accumulateur sur un côté d'une came d'éjecteur (36) du levier de fixation (12) tourné vers la surface de butée (13a).

7. Dispositif porté sur le dos selon l'une des revendications 1 à 6, **caractérisé en outre en ce que** le coulisseau de fixation ou le levier de fixation comprend un élément de commande (10c, 12c) actionné par un utilisateur, lequel élément se trouve sur un côté (VS) de la base de support opposé à un côté d'accouplement de bloc d'accumulateur (AS) de la base de support.

8. Dispositif porté sur le dos selon l'une des revendications 1 à 7, **caractérisé en outre en ce que** le dispositif de retenue comprend un ensemble de ressort de soutien (14) qui produit un soutien élastique du bloc d'accumulateur dans la position de support par une force de ressort agissant dans la direction de pivotement vers l'extérieur.

9. Dispositif porté sur le dos selon l'une des revendications 1 à 8, **caractérisé en outre en ce que** l'unité de sangle de support (4) comprend une unité de sangle d'épaule (5), une unité de sangle sous-abdominale (15) et une unité d'articulation, laquelle relie l'unité de sangle sous-abdominale à la base de support (3) de manière articulée, l'unité d'articulation possédant une double articulation (16) au moyen de laquelle l'unité de sangle sous-abdominale (15) est reliée à la base de support (3) de manière mobile en pivotement autour de deux axes de pivotement (GS1, GS2), l'un (GS1) des deux axes de pivotement s'étendant sensiblement parallèlement à un plan de plaque (P_{T}) de la base de support (3) et l'autre axe de pivotement (GS2) s'étendant sensiblement perpendiculairement au plan de plaque de la base de support (3).

10. Dispositif porté sur le dos selon la revendication 9, **caractérisé en outre en ce que** l'unité d'articulation est formée par un composant autonome qui est fixé d'une part à l'unité de sangle sous-abdominale (15) et d'autre part à la base de support (3).

11. Dispositif porté sur le dos selon la revendication 9 ou 10, **caractérisé en outre en ce que** l'un des axes de pivotement (GS1) s'étend sensiblement entre deux bords latéraux (SK1, SK2), tournés l'un vers l'autre, de l'unité de sangle sous-abdominale (15) et la base de support (3) et parallèlement à ces bords, et l'autre axe de pivotement (GS2) s'étend, par rapport à cet axe de pivotement (GS1), de manière décalée dans une direction opposée à l'unité de sangle sous-abdominale (15) .

12. Dispositif porté sur le dos selon l'une des revendications 1 à 11, **caractérisé en outre en ce que** l'unité de sangle de support (4) comprend au moins une unité de sangle d'épaule (5) qui peut être reliée de manière amovible à la base de support (3), et au moins un dispositif de retenue de sangle (17) résistant à la flexion, lequel peut être monté sur la base de support (3) par encliquetage de manière amovible à plusieurs hauteurs différentes au moyen d'un mécanisme d'encliquetage (22), et comporte au moins une courroie de sangle (18) souple reliée à celui-ci.

13. Dispositif porté sur le dos selon la revendication 12, **caractérisé en outre en ce que**
- le mécanisme d'encliquetage fournit plusieurs encoches (23) pour l'au moins un dispositif de retenue de sangle (17) à différentes hauteurs sur la base de support (3), l'encoche respective présentant une position de libération d'encliquetage (24) et une position de retenue d'encliquetage (25) décalée vers le haut par rapport à la position de libération d'encliquetage (24), positions entre lesquelles le dispositif de retenue de sangle (17) est déplaçable en hauteur sur la base de support (3), et/ou
- le mécanisme d'encliquetage comprend un verrouillage d'encliquetage (26) pouvant être déverrouillé qui maintient l'au moins un dispositif de retenue de sangle (17) de manière verrouillée dans la position de retenue d'encliquetage respective.

14. Kit d'outils comportant
- un dispositif porté sur le dos (1) selon l'une des revendications 1 à 13 et
- un bloc d'accumulateur (2) pouvant être porté sur le dos et pouvant être fixé au dispositif porté sur le dos (1) pour l'alimentation en énergie électrique d'outils électriques guidés à la main, en particulier d'outils de jardinage et forestiers entraînés électriquement.

15. Kit d'outils selon la revendication 14 comportant un outil électrique (27) guidé à la main et pouvant être alimenté en énergie électrique par le bloc d'accumulateur (2), en particulier un outil de jardinage et/ou forestier entraîné électriquement.
